# EUROPÄISCHE PATENTSCHRIFT

(11) **EP 3 442 744 B1**
(45) Veröffentlichungstag und Bekanntmachung des Hinweises auf die Patenterteilung: **15.11.2023**
(21) Anmeldenummer: 17716528.9
(22) Anmeldetag: 10.04.2017
(51) Int. Cl.: B24B 7/18, B24B 55/10

(54) **HAND-WERKZEUGMASCHINE MIT EINEM ABSAUGSCHLAUCH**
HAND-HELD MACHINE TOOL HAVING A SUCTION HOSE
MACHINE-OUTIL PORTATIVE POURVUE D'UN FLEXIBLE D'ASPIRATION

(30) Priorität: 11.04.2016 DE 102016106556
(43) Veröffentlichungstag der Anmeldung: 20.02.2019
(73) Patentinhaber: Festool GmbH, 73240 Wendlingen (DE)
(72) Erfinder: BARTH, Volker, 73773 Aichwald (DE); KNECHT, Nicolai, 72124 Pliezhausen (DE)
(74) Vertreter: Patentanwälte Bregenzer und Reule Partnerschaftsgesellschaft mbB
(86) Internationale Anmeldenummer: PCT/EP2017/058506
(87) Internationale Veröffentlichungsnummer: WO 2017/178409

(56) Entgegenhaltungen:
- EP-A1- 1 970 168
- CN-U- 203 527 181
- US-A- 4 782 632

## Beschreibung

Die Erfindung betrifft eine Hand-Werkzeugmaschine, insbesondere eine Schleifmaschine, mit einem stabförmigen Handgriffelement zum Ergreifen durch einen Bediener und einem über eine Gelenkanordnung an dem Handgriffelement beweglich gelagerten Bearbeitungskopf, der einen elektrischen Antriebsmotor zum Antreiben einer Werkzeugaufnahme zum Halten eines Bearbeitungswerkzeugs aufweist, gemäß dem Oberbegriff des Anspruchs 1.

Eine derartige Hand-Werkzeugmaschine ist in CN 203 527 181 U erläutert.

Eine weitere Hand-Werkzeugmaschine in Gestalt einer Schleifmaschine ist beispielsweise in DE 10 2007 012 394 A1 erläutert. Der Bearbeitungskopf in Gestalt eines Schleifkopfs kann relativ zu dem stabförmigen, einen Griffstab bildenden Handgriffelement kardanisch schwenken, sodass der Bediener den Schleifkopf bequem an Wandoberflächen entlang führen kann, um diese zu schleifen.

Die Handhabung einer derartigen Schleifmaschine ist jedoch in manchen Fällen unbequem. Insbesondere ist die Positionierung des Bearbeitungskopfes oder Schleifkopfs relativ zu der Wandoberfläche wegen des langen Griffstabs in manchen Arbeitssituationen schwierig.

Es ist daher die Aufgabe der vorliegenden Erfindung, eine verbesserte Hand-Werkzeugmaschine, insbesondere Schleifmaschine, bereitzustellen.

Zur Lösung dieser Aufgabe ist eine Hand-Werkzeugmaschine gemäß der technischen Lehre des Anspruchs 1 vorgesehen.

Das Handgriffelement kann an seiner Unterseite eine lang gestreckte Gestalt haben und/oder eine sich zumindest in einer Längsachse erstreckende Unterseitenfläche. Die Bearbeitungsseite des Bearbeitungskopfs ist vorzugweise lang gestreckt und/oder weist eine sich in einer Längsachse erstreckende Bearbeitungsfläche auf. Bevorzugt ist an der Bearbeitungsseite des Bearbeitungskopfs eine Bearbeitungsfläche vorgesehen, beispielsweise eine Schleiffläche, Polierfläche oder Reinigungsfläche.

Die Basisposition kann eine einzige Relativposition des Bearbeitungskopfs und dem Handgriffelement sein. Bevorzugt ist jedoch, dass die Basisposition einen Bestandteil eines Basis-Arbeitsbereichs oder eines mindestens eine oder mehrere Basispositionen enthaltenden Basispositionsbereichs bildet. In dem Basis-Arbeitsbereich, d.h. dass in einem größeren Bereich, beispielsweise Schwenkbereich und/oder Schiebebereich des Bearbeitungskopfs und des Handgriffelements relativ zueinander, sind die Unterseite des Handgriffelements und die Bearbeitungsseite des Bearbeitungskopfs sozusagen auf derselben Seite der Hand-Werkzeugmaschine angeordnet. Dies wird beispielsweise durch die nachfolgenden Erläuterungen deutlicher:
Aus der Basisposition ist der Bearbeitungskopf auslenkbar, beispielsweise schwenkbar und/oder verschieblich. Es ist beispielsweise möglich, dass eine Unterseitenfläche des Handgriffelements und eine an der Bearbeitungsseite des Bearbeitungskopfs vorgesehene Bearbeitungsfläche in einer Parallellage parallel oder etwa parallel zueinander sind. Unter etwa parallel soll ein kleiner Winkelbereich von maximal 10°, insbesondere maximal 5° oder 3° aus einer Lage verstanden werden, bei der die Unterseitenfläche und der Bearbeitungsfläche exakt parallel sind. Die Parallellage kann die entsprechende Basisposition sein. Es ist aber auch möglich, dass die Basisposition einen Bestandteil eines Basis-Arbeitsbereichs bildet, beispielsweise eines Schwenkbereichs. So kann die Bearbeitungsfläche beispielsweise aus der Parallellage heraus in zumindest eine Richtung schwenken, beispielsweise zu der Unterseite des Handgriffelements hin und/oder von der Unterseite des Handgriffelements weg.

Mit anderen Worten ist es also durchaus möglich, dass eine Bearbeitungsfläche an der Bearbeitungsseite, zum Beispiel eine Schleiffläche oder Polierfläche, von einer Längsachse des Handgriffelements etwa rechtwinkelig, insbesondere in einem Bereich von 80-120°, durchsetzt ist.

Der Absaugschlauch erstreckt sich in der Basisposition oder dem Basis-Arbeitsbereich also gerade nicht zu einem vorderen, vom Handgriffelement abgewandten Bereich des Bearbeitungskopfs über den Anlenkbereich hinweg. Der Absaugschlauch kann kürzer sein. Der Absaugschlauch ist gegenüber Beschädigungen besser geschützt. Der Absaugschlauch ist also nicht an einem von dem Handgriffelement abgewandten vorderen, freien Endbereich des Bearbeitungskopfs angeordnet, sondern an einem hinteren, dem Handgriffelement zugeordneten Bereich des Bearbeitungskopfs.

Eine günstige Anordnung sieht vor, dass der Absaugschlauch zumindest abschnittsweise geschützt neben einem Tragarm verläuft, der von dem Handgriffelement absteht und an dem der Bearbeitungskopf gehalten ist. Somit ist auch ein freier Abschnitt des Absaugschlauchs, der beispielsweise nicht in einem Rohr oder sonstigen Profilelement des Handgriffelements verläuft, neben dem Tragarm angeordnet und somit geschützt. Günstig ist eine Anordnung mit mehreren Tragarmen, beispielsweise zwei Tragarmen, wie auch im nachfolgenden Ausführungsbeispiel realisiert.

Zweckmäßigerweise ist vorgesehen, dass an dem den Bearbeitungskopf haltenden Endbereich des Handgriffelements eine Gabel angeordnet ist, die Gabelarme aufweist, an denen der Bearbeitungskopf gehalten ist und zwischen denen oder neben denen der Absaugschlauch verläuft. Bevorzugt ist also der Absaugschlauch in einem Zwischenraum zwischen den Gabelarmen angeordnet. Es ist aber auch möglich, dass der Absaugschlauch seitlich neben den Gabelarmen, außerhalb des Zwischenraums zwischen den Gabelarmen, angeordnet ist. Die Gabelarme schützen den Absaugschlauch vor Beschädigungen. Es ist aber möglich, dass der Absaugschlauch dennoch abschnittsweise vor die Gabelarme vorsteht, beispielsweise aus einem Zwischenraum zwischen den Gabelarmen nach oben oder unten heraus. Die Gabelarme sind beispielsweise Tragarme.

Es ist möglich, dass ein Abschnitt oder mehrere Abschnitte des Absaugschlauchs beispielsweise nach oben oder unten vor die Gabelarme oder den bereits erwähnten Tragarm oder die Gabelarme vorstehen. Beispielsweise hat der Absaugschlauch in der Basisposition des Bearbeitungskopfs einen Krümmungsabschnitt, der vor eine Seite des Tragarm oder der Gabelarme vorsteht. Ein zu einer anderen Seite, beispielsweise nach unten, vor die Gabelarme oder den erwähnten Tragarm vorstehender Abschnitt des Absaugschlauchs ist beispielsweise mit dem Absauganschluss des Bearbeitungskopfs verbunden.

Eine vorteilhafte Ausführungsform der Erfindung sieht vor, dass der Absaugschlauch an dem Endbereich des Handgriffelements und/oder an dem Absauganschluss zugfest oder schiebefest oder beides festgelegt ist. Vorteilhaft ist eine Konfiguration, bei der der Absaugschlauch beispielsweise drehbar bezüglich des Handgriffelements oder des Absauganschlusses ist. Dies kann die Bewegungsfreiheit oder Beweglichkeit des Bearbeitungskopfs verbessern.

Allerdings ist durch den günstigen Verlauf des Absaugschlauchs zwischen dem Anlenkbereich des Bearbeitungskopfs und dem Handgriffelement die Beweglichkeit des Bearbeitungskopfs relativ zum Handgriffelement auch dann in einem hohen Maße gegeben, wenn der Absaugschlauch am Bearbeitungskopf und/oder am Handgriffelement unbeweglich festgelegt ist.

Der Absaugschlauch besteht zweckmäßigerweise aus Gummi und/oder elastischem Kunststoff. Der Absaugschlauch kann mit einer Verrippung oder sonstigen Verstärkung, beispielsweise einer spiraligen Verstärkung oder einer Stützspirale, versehen sein.

Bevorzugt ist es, wenn der Absaugschlauch mit einer Längsachse oder Längserstreckungsrichtung des Handgriffelements fluchtend mit dem Handgriffelement verbunden ist. Es ist weiterhin vorteilhaft, wenn der Absaugschlauch beispielweise rechtwinkelig zu einer Bearbeitungsebene oder Schleifebene des Bearbeitungswerkzeugs oder in anderer Formulierung parallel zu einer Drehachse der Werkzeugaufnahme verlaufend am Bearbeitungskopf festgelegt ist. Vorteilhaft ist also vorgesehen, dass eine sich etwa in Strömungsrichtung des Saugstroms erstreckende Längsachse des ersten Schlauchendes des Absaugschlauchs mit einer sich entlang einer Längserstreckung des Handgriffelements erstreckenden Längsachse des Handgriffelements fluchtet und/oder eine sich etwa in Strömungsrichtung des Saugstroms erstreckende Längsachse des zweiten Schlauchendes des Absaugschlauchs etwa parallel zu einer Drehachse der Werkzeugaufnahme oder etwa rechtwinkelig zu einer Bearbeitungsebene oder Schleifebene des Bearbeitungswerkzeugs an dem Bearbeitungskopf ist.

Im Sinne einer höheren Flexibilität kann die folgende Maßnahme sein. Vorteilhaft ist vorgesehen, dass der Absaugschlauch zwischen dem Handgriffelement und dem Absauganschluss des Bearbeitungskopfs zwei einander entgegengesetzt gekrümmte Abschnitte aufweist. Die vorzugsweise vorgesehenen Krümmungsabschnitte des Absaugschlauchs zwischen Handgriffelement und Absauganschluss verlaufen gegensinnig. Beispielsweise kann der Absaugschlauch den Verlauf eines Fragezeichens oder einer S-Kurve haben. Dieser gekrümmte Verlauf kann in jeder Position des Bearbeitungskopfs relativ zu dem Handgriffelement vorgesehen sein. Es ist aber auch möglich, dass ein derartiger gekrümmter Verlauf nur in vorbestimmten Positionen des Bearbeitungskopfs relativ zum Handgriffelement vorgesehen ist, beispielsweise in einer Basisposition oder Ausgangsstellung, die der Bearbeitungskopf einnimmt, wenn er nicht durch eine äußere Kraft belastet ist.

Eine vorteilhafte Ausführungsform sieht vor, dass der Anlenkbereich des Bearbeitungskopfs zwischen dem Absauganschluss und dem Antriebsmotor vorgesehen ist. Dadurch ist eine besonders günstige Gewichtsverteilung gegeben. Einerseits belasten der Absaugschlauch und andererseits der Antriebsmotor den Bearbeitungskopf. Der Absaugschlauch kann zu einem Gewichtsausgleich beitragen. Der Absaugschlauch kann beispielsweise eine Kraftkomponente ausgleichen, mit der sich der Bearbeitungskopf am Handgriffelement abstützt. Der Absaugschlauch kann zu einer Balance des Bearbeitungskopfs relativ zum Handgriffelement beitragen. Ferner kann sich bei dieser Konfiguration oder durch diese auch ergeben, dass der Absaugschlauch in der Basisposition des Bearbeitungskopfs nicht über den Antriebsmotor hinweg verläuft.

Das Bearbeitungswerkzeug hat beispielsweise eine kreisförmige Außenumfangskontur und/oder zweckmäßigerweise eine kreisförmige Bearbeitungsseite oder Bearbeitungsfläche.

Bevorzugt ist vorgesehen, dass der Absauganschluss außerhalb eines Zentrums des Bearbeitungskopfes und/oder des Bearbeitungswerkzeugs angeordnet ist. Beispielsweise ist der Absauganschluss außerhalb eines Kreismittelpunkts einer im Wesentlichen oder exakt kreisförmigen Außenumfangskontur des Bearbeitungskopfes angeordnet.

Der Absauganschluss ist vorteilhaft exzentrisch, insbesondere möglichst weit exzentrisch, an dem Bearbeitungskopf angeordnet.

Der Absauganschluss ist vorzugsweise an einem Randbereich oder äußeren Umfangsbereich des Bearbeitungskopfs, beispielsweise einem Motorgehäuse oder einer Absaughaube des Bearbeitungskopfs, angeordnet.

Bevorzugt weist die Hand-Werkzeugmaschine einen Griffstab mit einer Längsachse auf oder umfasst einen derartigen Griffstab, wobei der Absaugschlauch im Verbindungsbereich mit dem Endbereich des Handgriffelements entlang dieser Längsachse verläuft. An dem Griffstab kann beispielsweise ein flexibler Saugschlauch angeordnet sein. Es ist aber auch möglich, dass das Handgriffelement einen biegesteifen Rohrkörper aufweist, in welchem ein mit dem Absaugschlauch zum Bearbeitungskopf hin in Strömungsverbindung stehender Absaugkanal verläuft. Der Rohrkörper kann beispielsweise als Profilrohr, insbesondere als biegesteifes Profilrohr ausgestaltet sein. Der Rohrkörper eignet sich in diesem Fall zum Ergreifen durch den Bediener. Mithin bildet also das Profilrohr einen Tragkörper oder eine tragfähige Komponente des Handgriffelements.

Das Handgriffelement weist zweckmäßigerweise mindestens einen Absaugkanal auf, der in Richtung einer Längsachse des Handgriffelements, beispielsweise in dem oben genannten flexiblen Saugschlauch oder dem Rohrkörper, verläuft und an seinem dem Bearbeitungskopf zugewandten Endbereich des Handgriffelements stirnseitig aus dem Handgriffelement ausmündet. Dort ist der Absaugschlauch zum Bearbeitungskopf hin mit dem Absaugkanal verbunden.

Bevorzugt ist jedoch das Handgriffelement zumindest an seinem dem Bearbeitungskopf zugewandten Endbereich als Absaugrohr ausgestaltet oder weist ein Absaugrohr auf. Mit diesem Absaugrohr ist der Absaugschlauch, der zum Bearbeitungskopf führt, verbunden.

Vorteilhaft ist vorgesehen, dass der Bearbeitungskopf durch eine von der Leitungsanordnung separate Positionierfederanordnung in die Basisposition relativ zu dem Handgriffelement belastet ist.

Im Zusammenhang mit der Positionierfederanordnung sei aber noch erwähnt, dass eine an sich eigenständige Erfindung eine Hand-Werkzeugmaschine, insbesondere eine Schleifmaschine, mit einem insbesondere stabförmigen Handgriffelement zum Ergreifen durch einen Bediener und einem über eine Gelenkanordnung an dem Handgriffelement beweglich gelagerten Bearbeitungskopf, der eine durch einen insbesondere an dem Bearbeitungskopf angeordneten elektrischen Antriebsmotor der Hand-Werkzeugmaschine antreibbare Werkzeugaufnahme zum Halten eines Bearbeitungswerkzeugs aufweist, wobei zwischen dem Handgriffelement und dem Bearbeitungskopf eine Leitungsanordnung zur Übertragung elektrischer und/oder mechanischer Energie und/oder zur Durchleitung eines Saugstroms vorhanden ist, darstellt, wobei bei der Hand-Werkzeugmaschine vorgesehen ist, dass der Bearbeitungskopf durch eine von der Leitungsanordnung separate Positionierfederanordnung in eine vorbestimmte Basisposition relativ zu dem Handgriffelement belastet ist.

Der Vorteil dieses Konzeptes ist es, dass der Schleifkopf oder Bearbeitungskopf in eine Ausgangslage oder Basisposition durch die Positionierfederanordnung belastet ist, so dass er relativ zum Handgriffelement eine definierte, jedoch nachgiebige Position einnimmt. Der Bediener kann den Bearbeitungskopf ausgehend von dieser Basisposition leicht relativ zur Wandoberfläche positionieren. Die Schleifarbeit geht einfach von der Hand.

Wenn mehrere Absaugschläuche oder sonstige Leitungen, beispielsweise Antriebswellen, der Leitungsanordnung vorgesehen sind, beispielsweise zwei Absaugschläuche, ist die Positionierfederanordnung von sämtlichen Absaugschläuchen separat. Unter einer Positionierfederanordnung soll vorteilhaft also eine dediziert zur Anfederung bzw. Federbelastung des Bearbeitungskopfs in die Basisposition relativ zum Handgriffelement vorgesehene Federanordnung verstanden sein.

Eine Ausführungsform der Erfindung sieht daher zweckmäßigerweise vor, dass die Positionierfederanordnung mindestens eine Schenkelfeder umfasst. Es ist aber auch möglich, dass die Positionierfederanordnung einen Gummipuffer und/oder einen Kunststoffpuffer umfasst. Weiterhin ist auch eine Schraubenfeder als ein Bestandteil der Positionierfederanordnung möglich. Ohne weiteres sind beliebige Kombinationen denkbar, d.h. dass beispielsweise eine Schenkelfeder an einem Gummipuffer oder Kunststoffpuffer anschlägt, sodass sich die Federwirkungen addieren. Es kann aber auch ein Gummipuffer parallel zu einer Schraubenfeder wirksam sein.

Die Positionierfederanordnung gibt beim Bearbeiten des Untergrunds bzw. einer Werkstückoberfläche nach, sodass der Bediener den Bearbeitungskopf bequem an der Werkstückoberfläche entlang führen kann.

Der Bearbeitungskopf nimmt die Basisposition ein, wenn er nicht durch äußere Kräfte belastet ist, beispielsweise durch eine Einwirkung eines Bedieners oder eine Kraftwirkung, die beispielsweise vom Werkstück auf die Hand-Werkzeugmaschine zurückwirkt.

Die Positionierfederanordnung ist vorzugsweise abseits der Leitungsanordnung angeordnet. Bevorzugt ist es, wenn die Positionierfederanordnung nicht unmittelbar auf die Leitungsanordnung wirkt und/oder separat von der Leitungsanordnung auf den Bearbeitungskopf wirkt.

Die Positionierfederanordnung ist zweckmäßigerweise nicht in einem unmittelbaren Krafteingriff mit der Leitungsanordnung.

Die Positionierfederanordnung ist vorteilhaft nicht von der Leitungsanordnung durchdrungen.

Die Positionierfederanordnung ist zweckmäßigerweise zu der Leitungsanordnung räumlich beabstandet.

Die Positionierfederanordnung wirkt vorteilhaft nicht über die Leitungsanordnung, insbesondere nicht über einen Saugschlauch, auf den Bearbeitungskopf.

Der Antriebsmotor ist vorzugsweise direkt am Bearbeitungskopf angeordnet.

Es ist es vorteilhaft, wenn direkt am Bearbeitungskopf ein Getriebe angeordnet ist, über welches die Werkzeugaufnahme angetrieben ist. Das Getriebe kann beispielsweise ein Exzentergetriebe und/oder ein drehzahl-veränderndes, insbesondere eine Drehzahl des Antriebsmotors verringerndes, Getriebe, insbesondere ein Zahngetriebe und/oder ein eine hyperzykloide Bewegung der Werkzeugaufnahme erzeugendes Getriebe umfassen oder sein.

Es ist auch möglich, dass der Antriebsmotor beispielsweise am Handgriffelement angeordnet ist und über eine Kraftübertragungsanordnung, beispielsweise mit einer Gelenkwelle, die Werkzeugaufnahme am Bearbeitungskopf direkt oder über ein Getriebe, insbesondere ein am Bearbeitungskopf vorgesehenes Getriebe, antreibt. Beispielsweise umfasst die Kraftübertragungsanordnung ein biegeflexibles Kraftübertragungselement, insbesondere zur Übertragung einer Drehbewegung des Antriebsmotors auf die Werkzeugaufnahme oder ein vorgeschaltetes Getriebe. Dieses Kraftübertragungselement bildet zweckmäßigerweise einen Bestandteil der Leitungsanordnung.

Die Positionierfederanordnung kann einem oder mehreren Bewegungsfreiheitsgraden des Bearbeitungskopfs relativ zum Handgriffelement zugeordnet sein oder in Bezug auf einen oder mehrere Bewegungsfreiheitsgraden wirksam sein. So ist es beispielsweise möglich, dass die Basisposition des Bearbeitungskopfs nur in Bezug auf einen Bewegungsfreiheitsgrad, insbesondere einen Schwenk-Bewegungsfreiheitsgrad oder Rotationsfreiheitsgrad durch die Positionierfederanordnung einstellbar ist, während mindestens ein anderer Bewegungsfreiheitsgrad, beispielsweise mindestens ein Translationsfreiheitsgrad und/oder mindestens ein Rotationsfreiheitsgrad, von der Positionierfederanordnung unbeeinflusst ist.

Eine jeweilige Positionierfeder stützt sich einerseits an einem mit dem Handgriffelement fest oder beweglich verbundenen Bauteil und andererseits an dem Bearbeitungskopf oder einem mit dem Bearbeitungskopf fest oder beweglich verbundenen Bauteil ab.

An dieser Stelle sei erwähnt, dass selbstverständlich bei mehreren Bewegungsfreiheitsgraden, die der Bearbeitungskopf relativ zum Handgriffelement hat, beispielsweise bei mehreren Schwenkachsen und/oder bei einer Kombination von Schwenkachse und Schiebeachse, jedem Bewegungsfreiheitsgrad eine Positionierfederanordnung oder ein Bestandteil davon zugeordnet sein kann. Es ist zum Beispiel möglich, dass bei einer mehrachsigen Schwenkbarkeit, beispielsweise zweiachsigen Schwenkbarkeit, des Bearbeitungskopfs relativ zum Handgriffteil mindestens zwei Schwenkachsen oder jeder Schwenkachse eine Positionierfeder oder Positionierfederanordnung zugeordnet ist, sodass der Bearbeitungskopf relativ zum Handgriffelement in Bezug auf beide Schwenkachsen eine stationäre Mittellage oder Basisposition einnimmt.

Eine bevorzugte Ausführungsform der Erfindung sieht jedoch vor, dass die Positionierfederanordnung nicht in Bezug auf jeden Bewegungsfreiheitsgrad des Bearbeitungskopfs relativ zum Handgriffelement wirkt. Zweckmäßigerweise ist der Bearbeitungskopf relativ zum Handgriffelement anhand der Gelenkanordnung um einen ersten Bewegungsfreiheitsgrad beweglich gelagert, beispielsweise um eine erste Schwenkachse schwenkbar gelagert, wobei die Positionierfederanordnung in Bezug auf diesen ersten Bewegungsfreiheitsgrad wirksam ist, während in Bezug auf mindestens einen zweiten Bewegungsfreiheitsgrad, beispielsweise eine Schwenkbeweglichkeit um eine zweite Schwenkachse, des Bearbeitungskopfs die Positionierfederanordnung keine Auswirkungen hat.

Bevorzugt ist es, wenn der Bearbeitungskopf in Bezug auf eine Schwenkachse, die quer, insbesondere rechtwinkelig quer, zu einer Längsachse des Handgriffelements verläuft, durch die Positionierfederanordnung in Richtung der Basisposition belastet ist. Insbesondere bei dieser Konfiguration ist es vorteilhaft, wenn der Bearbeitungskopf in Bezug auf eine Schwenkachse, die in einer Ebene mit einer Längsachse des Handgriffelements verläuft oder mit der Längsachse fluchtet, nicht durch die Positionierfederanordnung in Richtung der Basisposition belastet ist oder frei beweglich gelagert ist. In Bezug auf eine Längserstreckung oder Längsachse des Handgriffelements kann der Bearbeitungskopf vorteilhaft frei bewegt werden, beispielsweise pendelnd gelagert sein, während er quer, insbesondere rechtwinkelig quer, zu dieser Längsachse oder Längserstreckung oder einer Ebene, in der die Längserstreckung oder Längsachse verläuft, durch die Positionierfederanordnung in die Basisposition belastet ist.

Die Leitungsanordnung kann beispielsweise zur Übertragung elektrischer Energie dienen. Die elektrische Energie dient beispielsweise zur Stromversorgung eines Antriebsmotors des Bearbeitungskopfs. Die elektrische Energie kann aber auch eine sehr kleine Energie sein, nämlich eine Energie für eine Datenübertragung. Weiterhin kann die Leitungsanordnung zur Übertragung mechanischer Energie dienen, beispielsweise zur Übertragung einer Drehkraft von einem Antriebsmotor, der am Handgriffelement angeordnet ist, auf den Bearbeitungskopf. Beispielsweise umfasst die Leitungsanordnung dann eine flexible Drehwelle. Zur Durchleitung eines Saugstroms kann ein Saugschlauch vorgesehen sein. Über den Saugschlauch kann Staub, Schmutz oder dergleichen aus dem Bereich des Bearbeitungswerkzeugs abgesaugt werden.

Das Handgriffelement hat vorzugsweise eine Längsgestalt. Das Handgriffelement erstreckt sich entlang einer Längsachse oder weist eine Längsachse auf. In Bezug auf die Längsachse oder in Richtung der Längsachse steht das Handgriffelement von dem Bearbeitungskopf ab.

An dem Handgriffelement ist zweckmäßigerweise eine Bestromungseinrichtung zur Bestromung des Antriebsmotors angeordnet.

In Bezug auf die Gelenkanordnung, mit der der Bearbeitungskopf und das Handgriffelement beweglich zueinander gelagert sind, sind mehrere Varianten möglich, beispielsweise mindestens ein Schiebelager, mindestens ein Schwenklager oder beides.

Bevorzugt ist eine Ausführungsform, die in der Zeichnung dargestellt ist, bei der die Gelenkanordnung eine Schwenklageranordnung umfasst. Die Gelenkanordnung kann auch durch eine Schwenklageranordnung gebildet sein. Anhand der Schwenklageranordnung ist der Bearbeitungskopf relativ zu dem Handgriffelement um zumindest eine Schwenkachse schwenkbar gelagert. Bevorzugt ist eine Schwenklageranordnung mit einem ersten und einem zweiten Schwenklager, deren Schwenkachsen zueinander winkelig sind. Beispielsweise sind die erste und zweite Schwenkachse der beiden Schwenklager rechtwinkelig zueinander. Bevorzugt ist eine kardanische Schwenklageranordnung oder eine kardanische Lagerung.

Vorzugsweise umfasst die Gelenkanordnung mindestens ein Schiebelager zur linearen Verstellung des Bearbeitungskopfes relativ zu dem Handgriffelement. Es ist zum Beispiel möglich, dass der Bearbeitungskopf relativ zum Handgriffelement entlang einer Längsachse des Handgriffelements verstellbar ist.

Bevorzugt ist es, wenn die Positionierfederanordnung eine erste Positionierfeder und eine zweite Positionierfeder umfasst, die den Bearbeitungskopf gegensinnig und/oder voneinander entgegengesetzten Seiten in Richtung der Basisposition beaufschlagen. Die Positionierfedern wirken also von unterschiedlichen Seiten her oder in unterschiedlicher Wirkungsrichtung sozusagen in Richtung einer Mittellage, nämlich der Basisposition. Es ist möglich, dass die erste und zweite Positionierfeder mit einander entgegengesetzten Drehmomenten auf den Bearbeitungskopf einwirken. Beispielsweise wirken die Positionierfedern in einander entgegengesetzten Drehrichtungen oder Drehsinnen auf den Bearbeitungskopf.

Mindestens eine Positionierfeder erstreckt sich zweckmäßigerweise zumindest teilringförmig oder ringförmig um eine Schwenkachse, um die der Bearbeitungskopf relativ zum Handgriffelement schwenken kann. Bevorzugt sind zwei derartige Positionierfedern vorgesehen, von denen eine den Bearbeitungskopf in die eine erste Drehrichtung und die andere Positionierfeder den Bearbeitungskopf in eine zu der ersten Drehrichtung entgegengesetzten zweiten Drehrichtung beaufschlagt.

Zweckmäßigerweise ist vorgesehen, dass die erste Positionierfeder und die zweite Positionierfeder, die gegensinnig und/oder voneinander entgegengesetzten Seiten in Richtung der Basisposition wirken, an voneinander separaten und/oder im Abstand zueinander angeordneten Lagern, insbesondere Schwenklagern und/oder Schiebelagern, angeordnet sind. So können beispielsweise die erste Positionierfeder an einem ersten Schwenklager und die zweite Positionierfeder an einem zweiten Schwenklager angeordnet sein. Zweckmäßigerweise ist zwischen den Schwenklagern der Bearbeitungskopf angeordnet. So ist es z.B. möglich, dass die beiden Positionierfedern jeweils von anderen Achselementen oder Achsstücken durchsetzt sind.

Zweckmäßig ist es auch, wenn die Positionierfederanordnung, insbesondere unmittelbar, an mindestens einem Lager der Gelenkanordnung angeordnet ist. Vorteilhaft ist es, wenn die Positionierfederanordnung mindestens eine Positionierfeder umfasst, die sich unmittelbar an Lagerelementen der Gelenkanordnung abstützt. Die Lagerelemente sind beispielsweise Bestandteile eines Lagers zum Schwenken oder Verschieben des Bearbeitungskopfs relativ zum Handgriffelement in Bezug auf eine erste Schwenkachse oder Schiebeachse. Beispielsweise stützt sich eine derartige Positionierfeder, insbesondere eine Schenkelfeder, einerseits an einem nachfolgend noch näher beschriebenen Stützarm oder Gabelarm der Gelenkanordnung und andererseits an einem mit dem Bearbeitungskopf fest verbundenen oder an dem Bearbeitungskopf beweglich gelagerten Lagerelement ab. Das am Bearbeitungskopf beweglich gelagerte Lagerelement kann beispielsweise ein Lagerelement sein, welches seinerseits um eine weitere Schwenkachse oder Schiebeachse beweglich bezüglich des Bearbeitungskopfs ist. Das mit dem Handgriffteil verbundene Lagerelement kann beispielsweise ein Bestandteil eines Schwenklagers sein, anhand dessen der Bearbeitungskopf um eine erste Schwenkachse relativ zum Handgriffelement schwenkbar ist.

Es ist aber prinzipiell auch möglich, dass die oder eine Positionierfeder sich einerseits an einem Grundkörper des Bearbeitungskopfs und andererseits an einem Bauteil der Gelenkanordnung oder dem Handgriffelement unmittelbar abstützt. Es ist also nicht unbedingt notwendig, dass sich die Positionierfederanordnung als Ganzes oder mindestens eine Positionierfeder unmittelbar an einem Lager abstützt oder Bestandteil eines Lagers ist. Auch eine Anordnung einer Positionierfeder außerhalb eines Lagers der Gelenkanordnung oder neben einem Lager ist ohne weiteres möglich. Eine derartige außerhalb des Lagers angeordnete Positionierfeder kann zusätzlich zu einer innerhalb eines Lagers angeordneten Positionierfeder vorgesehen sein.

Es ist vorteilhaft, wenn eine Positionierfeder oder alle Positionierfedern der Positionierfederanordnung in einem Gehäuse, zum Beispiel dem nachfolgend erläuterten Lagergehäuse, ganz oder teilweise eingehaust ist. Eine derartig angeordnete Positionierfeder ist zum Beispiel vor Beschädigungen und/oder Umwelteinwirkungen oder dergleichen geschützt.

Die Integration mindestens einer Positionierfeder in ein Lager der Gelenkanordnung, insbesondere in ein Lagergehäuse, ist vorteilhaft. Bevorzugt ist vorgesehen, dass mindestens eines der Lagerelemente, an welchem eine Positionierfeder sich abstützt, ein Lagergehäuse aufweist, in welchem die mindestens eine Positionierfeder ganz oder zumindest teilweise eingehaust ist. Beispielsweise umfasst das Lagergehäuse eine Aufnahmehülse für die Positionierfeder. Insbesondere eine Schenkelfeder lässt sich in einer derartigen Aufnahmehülse vorteilhaft unterbringen.

Vorteilhaft ist es, wenn sich mindestens eine Positionierfeder, beispielsweise eine Schenkelfeder oder Drehfeder, ringförmig um mindestens eine Schwenkachse der Gelenkanordnung erstreckt.

Eine zweckmäßige Ausführungsform sieht vor, dass mindestens ein Lagerelement, an welchem sich eine Positionierfeder abstützt, eine Lagerwellenteil, z.B. einen Lagerbolzen, umfasst oder dass ein Lagerwellenteil an dem Lagerelement angeordnet ist, an dessen Außenumfang die Positionierfeder angeordnet ist oder das in die Positionierfeder eingreift. Das Lagerwellenteil oder der Lagerbolzen kann die Positionierfeder aber auch durchdringen. In Kombination mit der vorher erläuterten Ausführungsform ist es beispielsweise möglich, dass die Positionierfeder, insbesondere eine Schenkelfeder, vom Lagerwellenteil oder Lagerbolzen durchdrungen ist und in einer Aufnahmehülse mindestens eines Lagerelements angeordnet ist.

Vorteilhaft ist vorgesehen, dass die Gelenkanordnung eine Gabel umfasst, die von dem Handgriffelement absteht. Der Bearbeitungskopf oder ein Lagerelement, welches seinerseits mit dem Bearbeitungskopf fest oder gelenkig verbunden ist, sind vorteilhaft zwischen Gabelarmen der Gabel gehalten oder angeordnet.

Es ist vorteilhaft, wenn sich die Gabelarme dieser Gabel etwa parallel zur Längsachse des Handgriffelements erstrecken.

Eine Gabelbasis oder ein Gabelfuß der Gabel ist zweckmäßigerweise fest mit dem Handgriffelement, zum Beispiel einem Griffstab oder Griffstabteil, verbunden.

Bevorzugt ist es, wenn die Gabel an ihrem Gabelfuß oder ihrer Gabelbasis einen Durchlass für die Leitungsanordnung hat, die zwischen dem Handgriffelement und dem Bearbeitungskopf verläuft. Beispielsweise ist die Gabelbasis oder der Gabelfuß als eine Art Klemmschelle zum Klemmen eines Profilteils und/oder eines Endbereichs des Handgriffelements ausgestaltet.

Die Gabelarme, jedenfalls mindestens ein Gabelarm, sind vorzugsweise mit einer Rippenstruktur verstärkt.

Die Gabel dient zweckmäßigerweise zur Abstützung der Positionierfederanordnung, insbesondere einer oder aller Positionierfedern der Positionierfederanordnung, bezüglich des Handgriffelements. Mithin stützt sich die jeweilige Positionierfeder einerseits an der Gabel, insbesondere deren Gabelarmen, und andererseits an dem Bearbeitungskopf ab. Die jeweilige Positionierfeder ist dadurch nahe beim Bearbeitungskopf abgestützt.

Bevorzugt stützt sich die jeweilige Positionierfeder nicht an einem Verbindungsbereich der Gabel mit dem Handgriffelement an der Gabel ab.

Vorteilhaft stützt sich die jeweilige Positionierfeder an einem dem Bearbeitungskopf zugewandten Endbereich der Gabel, insbesondere an freien Endbereichen der Gabelarme, an der Gabel ab.

Vorteilhaft sind folgende Winkelverhältnisse zwischen dem Handgriffelement und dem Bearbeitungskopf in der Basisposition vorgesehen.

In der Basisposition sind zweckmäßigerweise einerseits eine Längsachse des Handgriffelements und andererseits eine Drehachse der Werkzeugaufnahme und/oder eine zur Bearbeitung eines Werkstücks vorgesehene Bearbeitungsebene des Bearbeitungswerkzeugs oder eine Bodenebene oder Fußebene des Bearbeitungskopfs in einem Winkel zueinander angeordnet, der folgende Bereiche haben kann. Der Winkel liegt vorzugsweise in einem Bereich zwischen 0° und 90°. Bevorzugt ist ein etwas engerer Winkelbereich von beispielsweise 20-70°. In der Praxis hat sich ein Winkelbereich von ca. 30-60° als vorteilhaft herausgestellt.

Weiterhin ist es in manchen Fällen auch vorteilhaft, wenn der Winkel in einem Bereich von ca. 25-40° liegt. Eine Grundeinstellung bei einem Winkel von ca. 30° ist vorteilhaft. Bei diesen Winkeln, beispielsweise dem Winkel von ca. 30°, ist also der Bearbeitungskopf relativ zur Längsachse des Handgriffelements schräg geneigt. Die Bearbeitungsebene, beispielsweise eine Schleifeebene oder Schleiffläche des Bearbeitungswerkzeugs, ist beispielsweise in einem Winkel von 30° oder einem der anderen oben genannten Winkeln zur Längsachse oder Längsrichtung des insbesondere als Griffstab ausgestalteten Handgriffelements orientiert. Wenn also der Bediener den Handgriff in einem Winkel von ca. 30° oder auch einem anderen der oben genannten Winkeln schräg zu einer vertikalen zu bearbeitenden Wandfläche hält, ist die Bearbeitungsebene des Bearbeitungswerkzeugs parallel zur Wandfläche.

Ein Schwenkbereich des Bearbeitungskopfs relativ zum Handgriffelement ist beispielsweise auf ca. 180°, insbesondere 120°, vorzugsweise etwa 90-110° beschränkt. Beispielsweise ist der Bearbeitungskopf zwischen einer ersten und einer zweiten Auslenkposition, die gleichzeitig Maximalpositionen darstellen, schwenkbar. Zwischen den Auslenkpositionen liegt die durch die Positionierfederanordnung eingestellte Basisposition. Es versteht sich, dass diese Maximalpositionen nicht durch feste Anschläge definiert sein müssen, sondern dass die Maximalpositionen oder maximalen Auslenkpositionen auch federnde Anschläge oder federnde Endpositionen darstellen können. Beispielsweise kann die Positionierfederanordnung in den maximalen Auslenkpositionen einen Anschlag aufweisen oder einen federnden Anschlag darstellen. Aber auch die bereits erwähnte Leitungsanordnung zwischen Handgriffelement und Bearbeitungskopf kann eine feste oder federnde Anschlageinrichtung zur Begrenzung eines Schwenkwegs oder Bewegungswegs des Bearbeitungskopfs relativ zum Handgriffelement bilden.

Von der Basisposition ausgehend kann der Bearbeitungskopf zweckmäßigerweise in eine erste Auslenkposition schwenken, in welcher die Drehachse der Werkzeugaufnahme etwa rechtwinkelig zur Längsachse des Handgriffelements ist. In der ersten Auslenkposition kann auch die Bearbeitungsebene des Bearbeitungswerkzeugs, beispielsweise eine Schleifebene eines Schleiftellers oder eine Unterseite eines Schleiftellers, parallel oder etwa parallel zur Längsachse des Handgriffelements sein. Ausgehend von der Basisposition kann der Bearbeitungskopf vorzugsweise in eine erste Auslenkposition um ca. 30° schwenken.

In einer zu der ersten Auslenkposition in Bezug auf die Basisposition entgegengesetzten zweiten Auslenkposition ist der Bearbeitungskopf beispielsweise um ca. 60° bis 80° aus der Basislage oder Basisposition ausgelenkt. In der zweiten Auslenkposition ist beispielsweise eine Drehachse der Werkzeugaufnahme etwa parallel zu der Längsachse des Handgriffelements. Die Bearbeitungsebene, insbesondere eine Schleifebene, des Bearbeitungswerkzeugs ist in der zweiten Auslenkposition vorzugsweise etwa rechtwinkelig zu der Längsachse des Handgriffelements.

Beispielsweise umfasst die Leitungsanordnung einen Saugschlauch zum Absaugen von durch das Bearbeitungswerkzeug erzeugten Spänen, Staub oder dergleichen. Der Saugschlauch ist zweckmäßigerweise elastisch oder biegeflexibel. Der Saugschlauch kann eine federnde Wirkung haben.

Die Leitungsanordnung kann aber auch ergänzend oder alternativ zu dem Saugschlauch eine elektrische Leitung zur Übertragung von elektrischer Energie vom Handgriffelement zum Bearbeitungskopf umfassen. Auch eine derartige Leitungsanordnung, die eine oder mehrere elektrische Leitungen aufweist, kann eine gewisse Federwirkung ausgehend vom Handgriffelement auf den Bearbeitungskopf haben.

Die Positionierfederanordnung wirkt zweckmäßigerweise einer Federwirkung der Leitungsanordnung entgegen, die den Bearbeitungskopf relativ zum Handgriffelement belastet. Wenn also beispielsweise die Leitungsanordnung an sich den Bearbeitungskopf aus der Basisposition heraus beaufschlagt, wirkt die Positionierfederanordnung im Sinne einer Kompensation. Diese Kompensation kann in Bezug auf einen oder mehrere Bewegungsfreiheitsgrade des Bearbeitungskopfs relativ zum Handgriffelement vorgesehen sein.

Es ist aber auch möglich, dass die Federwirkung der Leitungsanordnung und die Federwirkung der Positionierfederanordnung gemeinsam den Bearbeitungskopf in Richtung der Basisposition belasten. Beispielsweise ist es möglich, dass die Leitungsanordnung den Bearbeitungskopf in eine erste Schwenkrichtung bezüglich einer Schwenkachse belastet und eine Positionierfeder der Positionierfederanordnung in diese erste Schwenkrichtung wirkt. Eine zweite Positionierfeder kann ebenfalls in die erste Schwenkrichtung wirken oder auch entgegen der ersten Schwenkrichtung, also in eine zweite Schwenkrichtung. Es wurde bereits eine Ausführungsform erläutert, bei der Positionierfedern in einander entgegengesetzten Drehrichtungen oder mit entgegengesetztem Drehsinn zwischen dem Handgriffelement und dem Bearbeitungskopf wirken.

Vorteilhaft ist es auch, wenn die Positionierfederanordnung im Vergleich zur Leitungsanordnung bezüglich des Bearbeitungskopfs eine höhere Federkraft und/oder höhere Federkonstante aufweist. Somit beaufschlagt die Positionierfederanordnung den Bearbeitungskopf mit höherer Kraft als die Leitungsanordnung, sodass letztlich die Federkraft der Positionierfederanordnung maßgeblich für die Positionierung des Bearbeitungskopfs in die Basisposition ist.

Eine vorteilhafte Ausführungsform der Erfindung sieht vor, dass die Gelenkanordnung auf ein Zentrum oder einen Schwerpunktbereich des Bearbeitungskopfs orientiert ist.

Vorteilhaft ist vorgesehen, dass mindestens eine Schwenkachse, vorzugsweise zwei Schwenkachsen oder alle Schwenkachsen der Gelenkanordnung, durch einen Schwerpunktbereich oder einen Mittelbereich oder ein Zentrum des Bearbeitungskopfs verlaufen.

Mindestens eine Leitung der Leitungsanordnung, beispielsweise ein Saugschlauch, oder die Leitungsanordnung als Ganzes ist zweckmäßigerweise außerhalb des Zentrums oder Mittelbereichs des Bearbeitungskopfs an diesen angelenkt. So ist es zum Beispiel möglich, dass der Bearbeitungskopf im Bereich seines Zentrums anhand der Gelenkanordnung beweglich bezüglich des Handgriffelements gelagert ist und außerhalb des Zentrums Leitungen vom Handgriffelement zum Bearbeitungskopf führen. Somit wirkt die Leitungsanordnung beispielsweise exzentrisch auf den Bearbeitungskopf und die Positionierfederanordnung dieser exzentrischen Belastung entgegen.

Es kann auch vorgesehen sein, dass der Antriebsmotor am Bearbeitungskopf exzentrisch bezüglich einer Schwenkachse, insbesondere einer quer, vorzugsweise rechtwinkelig, zur Längsachse des Handgriffelements verlaufenden Schwenkachse, angeordnet ist. Insbesondere in diesem Zusammenhang, aber auch bei anderen exzentrischen Gewichtsbelastungen, ist vorteilhaft vorgesehen, dass die Positionierfederanordnung eine zu einer Schwenkachse exzentrische und/oder außermittige Gewichtsbelastung des Bearbeitungskopfs, insbesondere durch den Antriebsmotor, kompensiert. Die Positionierfederanordnung stellt also den Bearbeitungskopf entgegen einer Gewichtsbelastung des Bearbeitungskopfs, die nicht im Zentrum angreift, in die Basisposition.

An dieser Stelle sei erwähnt, dass die Positionierfederanordnung zwar in Richtung der Basisposition auf den Bearbeitungskopf wirkt, jedoch Gewichtskräfte - abhängig vom jeweiligen Schwerpunkt des Bearbeitungskopfs - auf den Bearbeitungskopf abhängig von seiner relativen Lage im Raum einwirken, sodass die Positionierfederanordnung mit unterschiedlicher Kraft entgegen der Schwerkraft in Richtung der Basisposition wirkt, dennoch der Bearbeitungskopf relativ zum Handgriffelement abhängig von seiner jeweiligen Schwerpunktlage unterschiedliche Winkelstellungen und/oder Schiebepositionen einnehmen kann.

Eine Ausführungsform der Erfindung kann vorsehen, dass der Absauganschluss und der Antriebsmotor an einander entgegengesetzten Seiten einer Schwenkachse, insbesondere einer quer zur Längsachse des Handgriffelements verlaufenden Schwenkachse, angeordnet sind und die Positionierfederanordnung die durch den Absaugschlauch und den Antriebsmotor unterschiedlich auf den Bearbeitungskopf einwirkenden Kräfte relativ zum Handgriffelement sozusagen kompensiert oder ausgleicht.

Es ist erfindungsgemäß vorgesehen, dass die Gelenkanordnung eine erste Schwenkachse und eine zweite Schwenkachse aufweist, die zueinander winkelig, insbesondere rechtwinkelig sind. Vorteilhaft ist dabei, wenn die erste Schwenkachse quer, insbesondere rechtwinkelig quer zu einer Längsachse des Handgriffelements verläuft und die zweite Schwenkachse und die Längsachse des Handgriffelements in einer gemeinsamen Ebene oder zueinander parallelen Ebenen angeordnet sind. Zu dieser Ebene oder diesen Ebenen verläuft die erste Schwenkachse quer, beispielsweise rechtwinkelig quer. Dadurch ist zum Beispiel eine kardanische Lagerung realisiert

Eine Ausführungsform sieht vor, dass eine quer zu einer Längsachse oder Längserstreckungsachse des Handgriffelements verlaufende erste Schwenkachse der Gelenkanordnung zwischen der Längsachse des Handgriffelements und einer zu der ersten Schwenkachse der Gelenkanordnung quer, beispielsweise rechtwinkelig, verlaufenden zweiten Schwenkachse der Gelenkanordnung verläuft.

Vorteilhaft ist vorgesehen, dass eine oder die quer zu einer Längsachse des Handgriffelements verlaufende erste Schwenkachse weiter von der Werkzeugaufnahme entfernt ist als eine oder die zu der ersten Schwenkachse der Gelenkanordnung quer, insbesondere rechtwinkelig, verlaufende zweite Schwenkachse der Gelenkanordnung. Die zweite Schwenkachse verläuft beispielsweise unmittelbar an einer Oberseite des Bearbeitungswerkzeugs oder der Werkzeugaufnahme, so dass der Bearbeitungskopf und somit das Bearbeitungswerkzeug um diese zweite Schwenkachse schwenken, insbesondere pendeln, kann. Dadurch ist das Führungsverhalten des Bearbeitungskopfs günstig. Die zweite Schwenkachse ist also relativ nahe am Werkstück. Die zweite Schwenkachse ist beispielsweise eine sogenannte X-Achse.

Es ist vorteilhaft, wenn die Positionierfederanordnung den Bearbeitungskopf bezüglich der ersten Schwenkachse oder einer quer zur Längsachse des Handgriffelements verlaufenden Schwenkachse in die Basisposition belastet. Bezüglich der zweiten Schwenkachse oder einer zur Längsachse des Handgriffelements parallelen Schwenkachse ist der Bearbeitungskopf zweckmäßigerweise unbelastet oder jedenfalls nur durch eine eventuelle Krafteinwirkung der Leitungsanordnung belastet. Somit kann der Bearbeitungskopf relativ frei um die zweite oder zur Längsachse des Handgriffelements parallelen Schwenkachse pendeln oder schwenken, während er bezüglich der ersten Schwenkachse durch die Positionierfederanordnung in eine Ausgangslage, nämlich die Basisposition, belastet ist.

Die Hand-Werkzeugmaschine ist vorzugweise eine Schleifmaschine, Poliermaschine oder Fräsmaschinen. Insbesondere ist die Hand-Werkzeugmaschine bevorzugt mit Handgriffelement ausgestattet, das vom Bearbeitungskopf oder Motorgehäuse absteht.

Das Handgriffelement kann einteilig oder mehrteilig sein. Vorzugsweise ist oder umfasst das Handgriffelement einen Griffstab. Der Griffstab kann ein einteiliges Bauteil sein oder mehrere Stababschnitte aufweist, die lösbar voneinander sind und/oder anhand von Lagern relativ zueinander beweglich sind, sodass der Griffstab beispielsweise bei Nichtgebrauch zerlegt und/oder in eine kompakte Form gefaltet werden kann.

Nachfolgend wird ein Ausführungsbeispiel der Erfindung anhand der Zeichnung erläutert. Es zeigen:
- Figur 1: eine perspektivische Darstellung einer Schleifmaschine, von der in
- Figur 2: ein Bearbeitungskopf, beispielsweise ein Schleifkopf, perspektivisch dargestellt ist,
- Figur 3: eine Seitenansicht der Schleifmaschine mit in einer Basisposition befindlichem Bearbeitungskopf, der in Teilansichten gemäß
- Figur 4: in einer ersten, aus der Basisposition verstellten Auslenkposition und
- Figur 5: in einer zweiten, aus der Basisposition verstellten Auslenkposition dargestellt ist,
- Figur 6: eine Seitenansicht des Bearbeitungskopfs,
- Figur 7: eine Explosionsdarstellung eines Antriebs des Bearbeitungskopfs der Schleifmaschine,
- Figur 8: den Bearbeitungskopf der Schleifmaschine mit einer Gelenkanordnung in Explosionsdarstellung,
- Figur 9: die Gelenkanordnung der Schleifmaschine in Explosionsdarstellung,
- Figur 10: einen Antriebsmotor der Schleifmaschine mit einer Schutzschaltungen in Explosionsdarstellung,
- Figur 11: einen Querschnitt durch den Antriebsmotor gemäß Figur 6 etwa entlang einer Schnittlinie A-A,
- Figur 12: einen oberen Abschnitt eines Motorgehäuses des Bearbeitungskopfs schräg von hinten,
- Figur 13: eine perspektivische Schrägansicht von oben auf eine Motorbaugruppe des Bearbeitungskopfs mit dem Antriebsmotor, von dem in
- Figur 14: eine Querschnittsansicht, etwa entlang einer Schnittlinie F-F in Figur 13, dargestellt ist,
- Figur 15: eine Ansteuerschaltung für den Antriebsmotor,
- Figur 16: Griffstabteile eines Griffstabs für die Schleifmaschine in noch nicht gestecktem Zustand perspektivisch von schräg oben,
- Figur 17: die Anordnung gemäß Figur 16, jedoch im gesteckten Zustand,
- Figur 18: perspektivische Detaildarstellungen der in den Figuren 16 und 17 dargestellten Griffstabteile.

Das Ausführungsbeispiel bezieht sich auf eine Hand-Werkzeugmaschine 10 in Gestalt einer Schleifmaschine, wobei in Bezug auf manche Teilaspekte der nachfolgenden Beschreibung jedoch andere Ausführungsformen von Handwerkzeugmaschinen auch möglich sind, beispielsweise Fräsmaschinen, Poliermaschinen oder dergleichen. Weiterhin ist beim Ausführungsbeispiel ein lang gestrecktes Handgriffelement dargestellt, das durchaus kürzer oder länger sein kann. Die Hand-Werkzeugmaschine gemäß der Zeichnung ist zur Deckenbearbeitung oder Wandbearbeitung vorteilhaft. Man kann die Hand-Werkzeugmaschine 10 gemäß der Zeichnung auch als eine Decken-und/oder Wandschleifmaschine bezeichnen. Aspekte der nachfolgenden Ausführungen beziehen sich nicht unbedingt ausschließlich auf Schleifmaschinen, Poliermaschinen oder Fräsmaschinen, sondern können auch bei anderen Hand-Werkzeugmaschinen angewendet werden.

Die Hand-Werkzeugmaschine 10 weist einen Bearbeitungskopf 11 auf, der an einem Handgriffelement 12 anhand einer Gelenkanordnung 13 gelenkig gelagert ist, vorliegend zwar nicht schiebebeweglich, was im Prinzip möglich wäre, jedoch um zumindest eine Schwenkachse, im konkreten Ausführungsbeispiel sogar um zwei Schwenkachsen. Das Handgriffelement 12 ist stabförmig ausgestaltet. Es hat eine Längserstreckung oder Längsachse L. Das langgestreckte Handgriffelement 12 ermöglicht es, den Bearbeitungskopf 11 in großem Abstand vom Nutzer an einer Werkstückoberfläche O eines Werkstücks W, beispielsweise einer Wandoberfläche, entlang zu führen.

Die Gelenkanordnung 13 lagert den Bearbeitungskopf 11 bezüglich des Handgriffelements 12 anhand eines ersten Schwenklagers 14 um eine erste Schwenkachse S1 und anhand eines zweiten Schwenklagers 15 um eine zweite Schwenkachse S2. Anhand der Schwenklager 14, 15 kann der Bearbeitungskopf 11 relativ zum Handgriffelement 12 um die beiden Schwenkachsen S1 und S2 schwenken, wobei die Schwenkachsen S1 und S2 in einem rechten Winkel zueinander stehen. Prinzipiell wären aber auch andere als rechte Winkel denkbar. Die Schwenklager 14, 15 bilden vorteilhaft ein Kardanlager.

Die Schwenkachse S1 verläuft quer, vorliegend rechtwinkelig quer, zur Längsachse L des Handgriffelements 12. Die Schwenkachse S2 und die Längsachse L sind vorteilhaft in einer gemeinsamen Ebene angeordnet oder in zueinander parallelen Ebenen. Die Schwenkachse S2 und die Längsachse L schneiden sich vorliegend nicht.

Der Bearbeitungskopf 11 weist einen Tragkörper 16 auf, an welchem ein Antriebsmotor 17 gehalten ist. Der Antriebsmotor 100 treibt direkt oder vorliegend über ein Getriebe 80 eine Werkzeugaufnahme 19 um eine Drehachse D an. Die Werkzeugaufnahme 19 ist zum Halten eines Bearbeitungswerkzeugs 20 vorgesehen, das im an der Werkzeugaufnahme 19 montierten Zustand durch den Antriebsmotor 100 zu einer Drehbewegung antreibbar ist. Die Werkzeugaufnahme 19 umfasst beispielsweise eine Steckaufnahme, Bajonettkonturen, ein Schraubgewinde oder dergleichen andere an sich bekannte Montagemittel zum Montieren eines Bearbeitungswerkzeugs.

An dieser Stelle sei aber erwähnt, dass anstelle oder in Ergänzung der Drehbewegung der Werkzeugaufnahme 19 auch eine beispielsweise oszillierende Bewegung bei einer anderen Ausgestaltung eines Ausführungsbeispiels möglich ist. Weiterhin können auch überlagerte Drehbewegungen, beispielweise hyperzykloider Drehbewegungen, der Werkzeugaufnahme 19 realisierbar sein, wobei dann das Getriebe 80 entsprechend anders ausgestaltet ist, beispielsweise ein Exzentergetriebe aufweist.

Das Bearbeitungswerkzeug 20 ist vorliegend ein Schleifwerkzeug, insbesondere eine Schleifplatte. Das Bearbeitungswerkzeug 20 kann mehrere Komponenten enthalten, beispielsweise einen Schleifteller, an welchem eine Schleifscheibe oder ein Schleifblatt anordenbar ist. Dazu ist beispielsweise eine Klettverbindung zwischen dem Schleifteller und dem Schleifblatt vorteilhaft.

Durch das als Schleifwerkzeug ausgestaltete Bearbeitungswerkzeug 20 bildet die Hand-Werkzeugmaschine 10 eine Schleifmaschine 10A. Den Bearbeitungskopf 11 könnte man auch als einen Schleifkopf bezeichnen. Das langgestreckte, stabförmige Handgriffelement 12 erleichtert eine Bearbeitung von vom Bediener entfernten Flächen, beispielsweise Wandflächen. Die Hand-Werkzeugmaschine 10 bildet vorzugsweise ein Wand- und/oder Deckenschleifgerät. Die nachfolgend erläuterten Ausgestaltungen sind jedoch auch bei einer Vielzahl anders ausgestalteter Hand-Werkzeugmaschine, insbesondere Schleifmaschinen, aber auch Sägen, Bohrmaschinen oder dergleichen vorteilhaft.

Die Werkzeugaufnahme 19 und mithin das Bearbeitungswerkzeug 20, wenn es an der Werkzeugaufnahme 19 befestigt ist, sind vorzugsweise unter einer Abdeckung des Bearbeitungskopfs 11 angeordnet. Möglich wäre zum Beispiel, dass die Abdeckung 21 das Bearbeitungswerkzeug 20 über dessen gesamten Außenumfang und Oberseite abdeckt. Vorliegend ist eine bezüglich der Abdeckung 21 bewegliche Abdeckung 22, beispielsweise an einem vorderen, freien und vom Handgriffelement 12 abgewandten Bereich des Bearbeitungskopfes 11 vorgesehen. Die Abdeckung 22 ist zum Beispiel von der Abdeckung 21 entfernbar und/oder anhand eines Lagers beweglich zur Abdeckung 21 gelagert, beispielsweise um eine zu der Schwenkachse S2 parallele Schwenkachse. Eine Steckmontage der Abdeckung 22 an der Abdeckung 21 sieht beispielsweise Steckvorsprünge 22B, zum Beispiel Stecklaschen vor, die in Steckaufnahmen 21B der Abdeckung 21 einsteckbar sind, insbesondere mit den Steckaufnahmen 21B verrastbar sind.

Am äußeren Randbereich der Abdeckung 21, 22 kann eine Dichtung 22A, also Dichtelemente, zum Beispiel Bürsten, Dichtlippen oder dergleichen andere sich vorzugsweise an die Werkstückoberfläche O anpassende dichtende Elemente, vorgesehen sein. Es ist möglich, dass das Bearbeitungswerkzeug 20 vor die Dichtung 22A vorsteht.

Die Abdeckung 21, 22 ist beispielsweise an einer Unterseite der Tragplatte oder des Tragkörpers 16 befestigt oder mit dem Tragkörper 16 integral. An einer Oberseite, also von der Werkzeugaufnahme 19 abgewandt, sind am Tragkörper 16 ein Motorgehäuse 24 für den Antriebsmotor 100 und ein Absauganschluss 23 angeordnet.

An der von der Werkzeugaufnahme 19 abgewandten Oberseite des Motorgehäuses 24 ist ein Lufteinlass oder eine Einströmöffnung 25 zum Einlassen von den Antriebsmotor 100 kühlender Kühlluft angeordnet. Die Kühlluft K strömt beispielsweise über einen Luftauslassbereich 18 des Motorgehäuses 24 aus diesem heraus. Beispielsweise befindet sich der Luftauslassbereich 18 an einem zu der Einströmöffnung 25 winkeligen, beispielsweise am Außenumfang des Motorgehäuses 24 vorgesehenen Bereich. Prinzipiell möglich wäre es, dass die Kühlluft K bis zum durch die Abdeckungen 21, 22 eingehausten Bereich strömt und dort beispielsweise zur Kühlung des Bearbeitungswerkzeugs 20 oder auch zum Lösen von Staub beiträgt.

Der Luftauslassbereich 18 erstreckt sich sowohl in einer Arbeitsrichtung AR nach vorn, als auch seitlich dazu, beispielsweise über einen Winkelbereich von jeweils ca. 90° seitlich zur Arbeitsrichtung AR. Die Kühlluft K kann also einen sich in Arbeitsrichtung AR nach vorn und seitlich zur Arbeitsrichtung AR erstreckenden Arbeitsbereich AB frei blasen.

Über den Absauganschluss 23 können aus dem durch die Abdeckungen 21, 22 abgedeckten oder überdeckten Bereich Staub, Schmutz oder Späne abgesaugt werden. Der Absauganschluss 23 weist beispielsweise einen Stutzen 23A auf.

An den Absauganschluss 23 ist ein Absaugschlauch 26 mit einem Schlauchende 28 angeschlossen, der mit seinem anderen Schlauchende 27 mit dem Handgriffelement 12 verbunden ist.

Die Verbindung der Schlauchenden 27, 28 mit festen Strukturen, zum Beispiel dem Absauganschluss 23 und dem Handgriffelement 12, wird durch Strukturierungen 29, zum Beispiel Riffelungen, an den Schlauchelementen 27, 28 verbessert. Zur Befestigung des Schlauchendes 28 mit dem Absauganschluss 23 ist beispielsweise eine Klemme 30 vorgesehen, die anhand einer Schraube 30A in eine das Schlauchende 28 mit dem Stutzen 23A verklemmende Klemmstellung bringbar ist. Am anderen Schlauchende 27 sind beispielsweise ein hülsenförmiges Anschlussteil 31 sowie ein Verbindungsstutzen 32 zur Verbindung mit einem stabförmigen Kanalkörper 33 des Handgriffelements 12 vorgesehen, so dass ein aus dem Absauganschluss 23 ausströmender mit Schmutz beladener Saugstrom S in einen Strömungskanal 34 des Handgriffstücks 33 strömen kann.

An einander entgegengesetzten Längsendbereichen 12A und 12B des Handgriffelements 12 sind eine Handgriffpartie 35 und andererseits der Bearbeitungskopf 11 angeordnet. Die Handgriffpartie 35 dient vorzugsweise zum Ergreifen durch einen Bediener.

Der stabförmige, lang gestreckte Kanalkörper 33 erstreckt sich zwischen der Gelenkanordnung 13 und der Handgriffpartie 35 des Handgriffelements 12. Die Handgriffpartie 35 ist zwischen dem Kanalkörper 33 und einem Kanalkörper 36 angeordnet, an welchem ein Absauganschluss 37 zum Anschließen eines Saugschlauches C vorgesehen ist. Der Saugschlauch C kann beispielsweise anhand einer Befestigungsanordnung 38 mit dem Kanalkörper 36 verbunden werden. Die Befestigungsanordnung 38 umfasst beispielsweise eine Klemmschelle, eine Hakenanordnung oder dergleichen.

An der Handgriffpartie 35 ist ein Schalter 39 zum Einschalten des Antriebsmotors 100 vorgesehen.

Im Bereich der Handgriffpartie 34 ist eine Bestromungseinrichtung 40 zur Bestromung einer Erregerspulenanordnung 120 des Antriebsmotors 100 angeordnet.

Über ein Netzkabel N, das beispielsweise an dem Saugschlauch C angeordnet oder in den Saugschlauch C integriert sein kann, ist die Bestromungseinrichtung 40 an ein elektrisches Versorgungsnetz V oder eine sonstige Stromquelle anschließbar. Bei der sonstigen Stromquelle kann es sich beispielsweise um einen Akkupack oder einen anderen Energiespeicher handeln, der an Bord der Hand-Werkzeugmaschine 10 sein kann.

Über Dioden D1, D2, D3 und D4 eines Gleichrichters G kann die Bestromungseinrichtung 40 beispielsweise aus einer durch das Versorgungsnetz V bereitgestellten Wechselspannung in bekannter Weise eine Gleichspannung UG gegenüber Masse oder einem Basispotenzial U0 erzeugen, wobei zwischen den Potenzialen UG und U0 vorteilhaft ein Kondensator C1 , beispielsweise ein Glättungskondensator oder Zwischenkreiskondensator, angeordnet ist.

An Leitungen mit den Potenzialen U1, U0 ist eine Endstufe E, z.B. ein Kommutator, angeschlossen, die über Leitungen L1, L2 und L3 Erregerströme I1, I2 und I3 für den Antriebsmotor 100 bereitstellt. Die Endstufe E umfasst beispielsweise Schalterpaare mit leistungselektronischen Schaltern, beispielsweise MosFETs, V1, V2 und V3, V4 und V5, V6 zwischen die jeweils die Leitungen L1, L2 und L3 in der Art von Halbbrücken angeschlossen sind.

Die Schalter V1-V6 werden durch eine Steuerung 170 über nicht dargestellte Steuerleitungen angesteuert. Die Steuerung 170 überwacht beispielsweise anhand einer Stromüberwachungseinrichtung 171 den Stromfluss auf der Leitung L1. Ohne weiteres könnten auch weitere Stromüberwachungseinrichtung, beispielsweise für die Leitungen L2 und L3 vorgesehen sein. Die Stromüberwachungseinrichtung 171 hat beispielsweise eine entsprechende Induktivität, um den Stromfluss auf der Leitung L1 zu erfassen.

Die Steuerung 170 umfasst zweckmäßigerweise ein Steuerungsprogramm 173, welches durch einen Mikrocontroller 172 der Steuerung 170 ausführbaren Programmcode umfasst. Durch Ausführung dieses Programmcodes kann die Steuerung 170 die Schalter V1-V6 geeignet ansteuern, um über einen entsprechenden Stromfluss auf den Leitungen L1 bis L3 eine Drehzahl und/oder Leistungsabgabe des Antriebsmotors 100 einzustellen. Aber auch das Schaltverhalten der Schalter V1-V6 kann für die Steuerung 170 ein Indiz sein, dass über eine oder mehrere der Leitungen L1 bis L3 kein Strom mehr fließt.

Die Leitungsanordnung 41 umfasst ein elektrisches Kabel 42, in welchem die Leitungen L1, L2 und L3 angeordnet sind. Das Kabel 42 verläuft von der Handgriffpartie 35 ausgehend in dem Kanalkörper 33 oder außen am Kanalkörper 33 und mündet an dessen dem Bearbeitungskopf 11 zugewandten Endbereich aus dem Kanalkörper aus. Von dort aus verläuft das Kabel 42 frei bis zum Antriebsmotor 100.

An der Handgriffpartie 34 ist ein Gehäuse 43 vorgesehen, in welchem die Bestromungseinrichtung 40 angeordnet ist. Die Bestromungseinrichtung 40 hat neben den leistungselektronischen Komponenten zweckmäßigerweise auch mechanische Komponenten, zum Beispiel Kühlmittel. Mithin weist also die Bestromungseinrichtung 40 ein gewisses Gewicht auf, das jedoch beim Betrieb der Handwerkzeugmaschine 10 nicht stört. Die Bestromungseinrichtung 40 ist nämlich unmittelbar an der Handgriffpartie 34 angeordnet, wo der Bediener das Handgriffelement 12 regelmäßig zumindest mit einer Hand ergreift. Somit wirkt in Bezug auf die elektrische Antriebstechnik nur der Antriebsmotor 100 im Sinne eines Hebels auf die Handgriffpartie 34, während sozusagen die Aufbereitung des Stroms für den Antriebsmotor 100 mit günstiger Schwerpunktlage direkt im Handgriffbereich des Handgriffelements 12 liegt.

Die Anordnung der vergleichsweise schmutzempfindlichen oder staubempfindlichen Elektronik in der Handgriffpartie 34 hat auch den Vorteil, dass sie möglichst weit weg von einem Bereich der Hand-Werkzeugmaschine 10 ist, wo Staub anfällt, nämlich am Bearbeitungskopf 11. Somit ist beispielsweise durch Einlässe 44 des Gehäuses 43 einströmende Luft, die vorzugsweise noch durch Kühlmittel, zum Beispiel einen Ventilator 45, in besonderem Maße gefördert wird, aufgrund der großen Entfernung zum Bearbeitungswerkzeug 20 wenig mit Staub belastet.

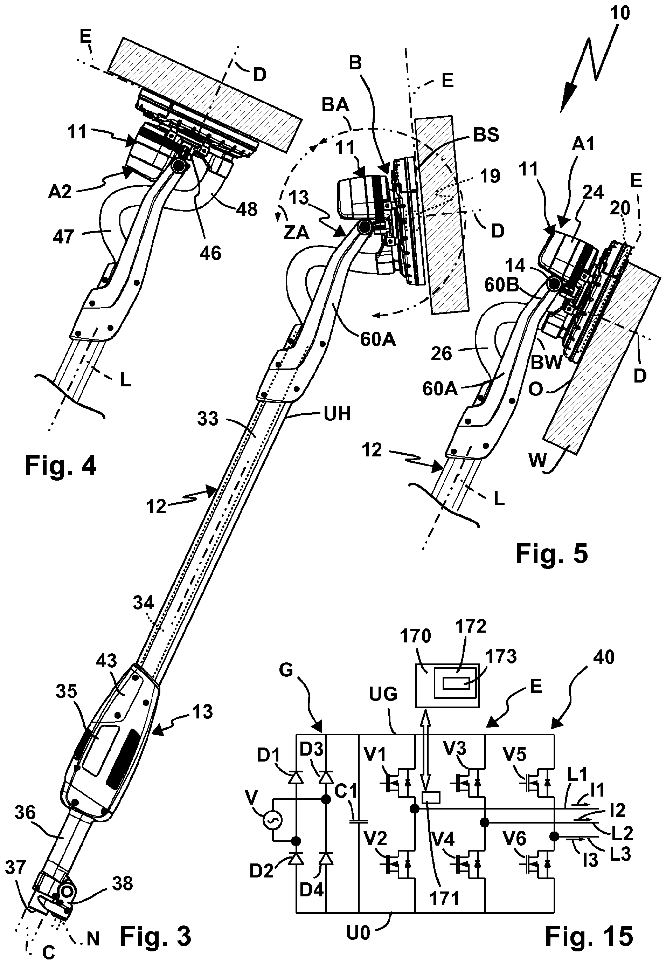

Zu einem günstigen Handling der Hand-Werkzeugmaschine 10 trägt bei, dass der Antriebsmotor 100 und der Absauganschluss 23 aneinander entgegengesetzten Seiten eines Anlenkbereichs 46 des Bearbeitungskopfes 11 angeordnet sind, wobei die Gelenkanordnung 13 an dem Anlenkbereich 46 mit dem Bearbeitungskopf 11 gelenkig verbunden ist. Der Absaugschlauch 26 hat zwischen dem freien Ende des Handgriffelements 12, wo er mit diesem verbunden ist, und dem Bearbeitungskopf 11 Bogenabschnitte, insbesondere zwei gegensinnig gebogene Bogenabschnitte 47, 48, sodass er die Bewegungen des Bearbeitungskopfes 11 relativ zum Handgriffelement 12 bequem mitmacht. Deutlich wird dies in den Figuren 3, 4 und 5.

Die Werkzeugaufnahme 19 ist an einer Bearbeitungsseite BS des Bearbeitungskopfs 11 angeordnet. In einer Basisposition B des Bearbeitungskopfs 11 relativ zum Handgriffelement 12 sind die Bearbeitungsseite BS und eine Unterseite UH des Handgriffelements 12 dem Werkstück W zugewandt.

Ausgehend von der Basisposition B (Figur 3) kann der Bearbeitungskopf 11 zwischen Auslenkpositionen A1 (Figur 5) und A2 (Figur 4) schwenken. Die Auslenkpositionen A1, A2 sind zweckmäßigerweise Maximalpositionen, wobei ein Schwenken über diese Auslenkpositionen A1, A2 hinaus durchaus möglich ist. Ist der Absaugschlauch 26 über die Auslenkpositionen A1 und A2 hinaus in einem noch größeren Maße auszulenken bzw. zu verformen, bildet er zweckmäßigerweise einen federnden Anschlag für die Auslenkpositionen A1 und A2.

Die Basisposition B bildet zusammen mit den Auslenkpositionen A1 und A2 und gegebenenfalls weiteren Auslenkpositionen über diese Auslenkpositionen hinaus oder Zwischen-Auslenkpositionen zwischen den Auslenkpositionen A1 und A2 einen Bestandteil eines Basis-Arbeitsbereichs BA der Hand-Werkzeugmaschine 10. Es ist ein Schwenken über die Auslenkposition A2 hinaus, dass die Bearbeitungsseite BS und eine Oberseite des Handgriffelements 12 einem Werkstück W zugewandt sind, durchaus möglich. Dann befindet sich der Bearbeitungskopf 12 beispielsweise in einem Zusatz-Arbeitsbereich ZA.

In der Auslenkpositionen A1 verläuft beispielsweise eine Bearbeitungsebene E des Bearbeitungswerkzeugs 20 etwa parallel zur Längsachse L, während in der Auslenkposition A2 die Bearbeitungsebene E etwa rechtwinkelig zur Längsachse L ist.

An dem den Bearbeitungskopf 11 haltenden Endbereich des Handgriffelements 12, vorliegend also dem Kanalkörper 33, ist eine Gabel 50 angeordnet, zwischen deren Gabelarmen 51, 52 der Bearbeitungskopf 11 um die Schwenkachse S1 schwenkbar gelagert ist. Die Gabelarme 51, 52 sind an einem Halteabschnitt 53 in der Art von Halbschalen ausgestaltet, zwischen denen eine Halterung 54 oder eine Aufnahme für das Handgriffelement 12, insbesondere deren Kanalkörper 33, gebildet ist.

Die Halterung 54 ist beispielsweise zwischen Wänden 55 der Gabelarme 51, 52 ausgebildet, beispielsweise als runde Aufnahmekontur. Als Verdrehsicherung und/oder Verschiebesicherung bezüglich der Längsachse L des Handgriffelements 12 dienen Stützstrukturen 58 der Gabel 50, die insbesondere durch die Schraubdome 57 gebildet sein können. In die Stützstrukturen 58, beispielsweise Formschlussvorsprünge, greifen Stützstrukturen 33A des Handgriffelements 12 ein, beispielsweise am Außenumfang des Kanalkörpers 33 vorgesehen Vertiefungen, insbesondere Nuten oder Längsvertiefungen. Die Stützstrukturen 58, 33A wirken als Verdrehsicherung und/oder Verschiebesicherung bezüglich der Längsachse L des Handgriffelements 12.

Als Zugentlastung für das Kabel 42 ist es vorteilhaft, wenn eine Kabelklemme 49 an der Gabel 50 vorgesehen ist. Die Kabelklemme 49 weist beispielsweise an jedem der Gabelarme 51, 52 vorgesehene Klemmkörper auf, die beim Zusammenfügen der Gabelarme 51, 52 zur Fixierung des Halteelements 12 gleichzeitig das Kabel 42 klemmen.

Die Gabelarme 51, 52 sind insbesondere an ihren vor den Halteabschnitt 53 vorstehenden Armabschnitten 60A, 60B verstärkt, beispielsweise durch eine Rippenstruktur 59.

Die Gabelarme 51, 52 weisen zwischen dem Halteabschnitt 53 und ihren freien Enden 61 Abwinkelungen 62, 63 zwischen den Armabschnitte 60A, 60B auf. Die Abwinkelungen 62, 63 dienen bevorzugt dazu, den Zwischenraum zwischen den Gabelarmen 51, 52 und den Bewegungsraum unterhalb der Gabelarme 51, 52 für den Bearbeitungskopf 11 optimal auszugestalten.

Die Abwinkelungen 62 verlaufen einander entgegengesetzt im Sinne einer Aufweitung oder Verbreiterung eines Abstandes zwischen den Enden 61. Dadurch ist insbesondere im Bereich des Absaugschlauchs 26 und des Absauganschlusses 23 ein vergrößerter Bewegungsraum zwischen den Gabelarmen 51, 52 vorhanden.

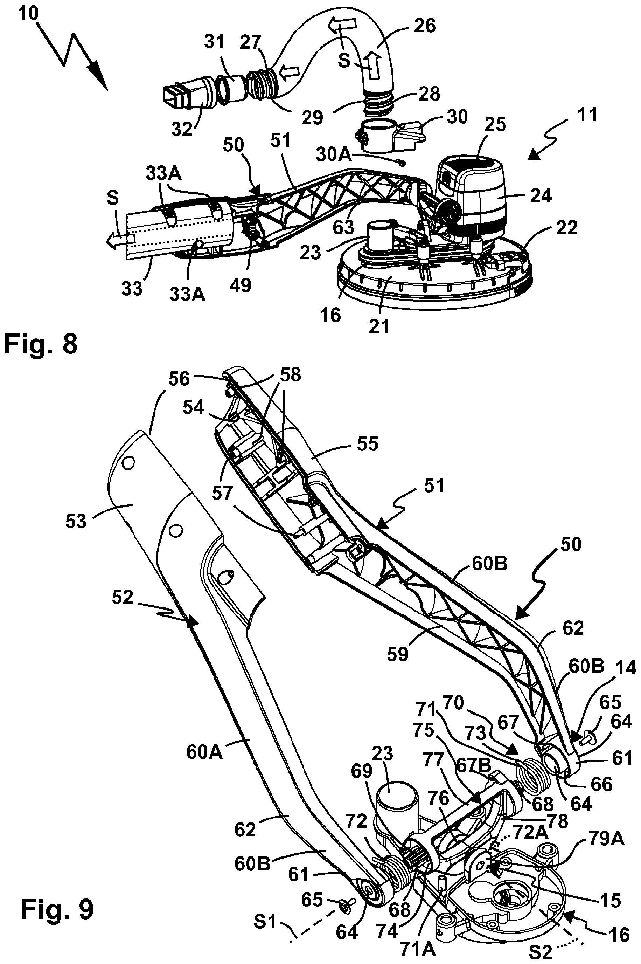

Die Abwinkelungen 63 verlaufen gleichsinnig nebeneinander, jedoch ausgehend vom Handgriffelement 12 und bezüglich der Längsachse L in einem Sinne von dem Bearbeitungskopf 11 weg und zu den freien Enden 61 wieder zum Bearbeitungskopf 11 oder der Längsachse L hin, so dass insbesondere für die Auslenkposition A1, etwa entsprechend Figur 8, oder eine weitere Auslenkung über die Auslenkposition A1 hinaus ein Raum BW unterhalb der Gabelarme 51, 52 für einen oberen Abschnitt des Bearbeitungskopfs 11 vorhanden ist.

An den freien Enden 61 sind als Lageraufnahmen ausgestaltete Lagerelemente 64 für Lagerwellenteile 65 des Schwenklagers 14 vorgesehen. Die Lagerwellenteile 65, die z.B. in der Art von Lagerbolzen ausgestaltet sind, sind beispielsweise Schrauben oder dergleichen andere Bolzen, die die Lageraufnahmen der Lagerelemente 64 durchdringen und in als Lagervorsprünge ausgestaltete Lagerelemente 68 eindringen.

Die Lagerelemente 68 sind an einem Lagerkörper 75 vorgesehen und stehen vor eine Traverse 77 des Lagerkörpers 75 vor. Der Lagerkörper 75 ist beispielsweise als eine Art Lagerwelle oder Lagervorsprung ausgestaltet. Beispielsweise sind die Lagerelemente 68 an den jeweiligen Längsendbereichen der Traverse 77 vorgesehen. Zwischen der Traverse 77 und dem Tragkörper 16 erstreckt sich ein Stützlagerabschnitt 78, der beispielsweise bogenförmig ist.

Der Stützlagerabschnitt 78 bildet einen Bestandteil des Schwenklagers 15 zum Schwenken um die Schwenkachse S2. Der Stützlagerabschnitt 78 ist von einer Lagerwelle 76 durchdrungen, die ihrerseits wiederum in Lageraufnahmen 79 von Lagerböcken 79A aufgenommen ist, die vor den Tragkörper 16 vorstehen. Der Stützlagerabschnitt 78 ist zwischen den Lagerböcken 79A angeordnet. Selbstverständlich könnten anstelle der Lagerwelle 76 auch Lagerbolzen vorgesehen sein, die beispielsweise die Lageraufnahmen 79 durchdringend im Lagerkörper 75 insbesondere drehbar aufgenommen sind. Somit ist also die Schwenkachse S2 näher beim Tragkörper 16 als die Schwenkachse S1, so dass der Bearbeitungskopf 11 um die entsprechend nahe bei der Bearbeitungsebene E befindliche Schwenkachse S2 schwenken kann. Der Bearbeitungskopf kann dem Verlauf der Werkstückoberfläche O bequem folgen.

In Bezug auf die Schwenkachse S2 pendelt oder schwenkt der Bearbeitungskopf 11 frei, wobei der Absaugschlauch 26 und die Leitungsanordnung 41 die Schwenkbewegung dämpfen oder bremsen. Dabei ist allerdings zu berücksichtigen, dass der Absauganschluss 23 nahe bei der Schwenkachse S2 ist bzw. von der Schwenkachse S2 durchdrungen ist, was die Schwenkbarkeit des Bearbeitungskopfes 11 um die Schwenkachse S2 entsprechend wenig einschränkt.

In Bezug auf die Schwenkachse S1 hingegen ist eine Positionierfederanordnung 70 vorgesehen, die in dem Bearbeitungskopf 11 in die Basisposition B beaufschlagt. Die Positionierfederanordnung 70 umfasst an den Lagerelementen 64, 68 direkt abgestützte Positionierfedern 71, 72. Die Positionierfeder 71 ist dem Gabelarm 51 zugeordnet, während die Positionierfeder 72 dem Gabelarm 52 zugeordnet ist. Die Positionierfedern 71, 72 beaufschlagen den Bearbeitungskopf 11 gegensinnig, d.h. die eine Positionierfeder 71 beaufschlagt den Bearbeitungskopf 11 beispielsweise bezüglich der Schwenkachse S1 im Uhrzeigersinn, während die andere Positionierfeder 72 den Bearbeitungskopf 11 im Gegenuhrzeigersinn beaufschlagt. Somit wird der Bearbeitungskopf 11 in Bezug auf die Schwenkachse S1 sozusagen in einer Mittellage, nämlich der Basisposition B gehalten.

Die Positionierfedern 71, 72 sind mit Stützarmen 73 an Stützaufnahmen 67 der Lagerelemente 64 und Stützaufnahmen 67B bei den Lagerelementen 68 abgestützt. Die Positionierfedern 71, 72 sind beispielsweise Schenkelfedern, deren Längsenden als Stützarme 73 ausgebildet sind.

Die Lagerelemente 68 durchdringen die Positionierfedern 71, 72. Am Außenumfang der Lagerelemente 68 sind zweckmäßigerweise Stützkonturen 69, zum Beispiel Rippen, vorgesehen, an denen sich die Positionierfedern 71, 72 mit ihrem Innenumfang abstützen können. Die Rippen oder Stützkonturen 69 verlaufen zweckmäßigerweise parallel zur Schwenkachse S1. Dadurch ist die Beweglichkeit der Positionierfedern 71, 72 und der Lagerelemente 68 relativ zueinander besonders gut.

Die Positionierfedern 71, 72 sind zweckmäßigerweise geschützt und eingehaust. Sie sind vorteilhaft in Lagergehäusen 66, 74 aufgenommen, die von den Lagerelementen 64, 68 bereitgestellt werden. Beispielsweise sind die Lagergehäuse 66, 74 zueinander komplementär oder passen in der Art von Hülsen oder Steckelementen ineinander, um die Positionierfedern 71, 72 insgesamt einzuhausen. Dadurch verschmutzen die Lagerkomponenten und insbesondere auch die Positionierfedern 71, 72 nicht. Zudem ist die Verletzungsgefahr durch eventuell vorstehende Elemente, zum Beispiel die Stützarme 73, gering.

Die Stützaufnahmen 67 sind beispielsweise an den Lagergehäusen 66 der Lagerelemente 64 vorgesehen. Die Stützaufnahmen 67B sind an den Lagergehäusen 74 bei den Lagerelementen 68 vorgesehen.

Es versteht sich, dass auch in Bezug auf die Schwenkachse S2 eine Positionierfederanordnung vorgesehen sein kann, die den Bearbeitungskopf 11 zum Handgriffelement 12 in Bezug auf die Schwenkachse S2 ausrichtet. Möglich wären beispielsweise Schenkelfedern, die von der Lagerwelle 76 durchsetzt sind und sich einerseits an Lagerböcken 79A und andererseits an beispielsweise dem Stützlagerabschnitt 78 abstützen. Schematisch sind weiterhin elastische Positionierfedern 71A, 72A in Gestalt von beispielsweise Gummipuffern dargestellt, die sich außerhalb des Lagers 15 an festen Strukturen einerseits der Gelenkanordnung 13, beispielsweise dem Stützlagerabschnitt 78, andererseits des Bearbeitungskopfs 11, beispielsweise dem Tragkörper 16 abstützen und somit eine Positionierung des Bearbeitungskopfs 11 zum Handgriffelement 12 bezüglich der Schwenkachse S2 bewirken.

Der Antriebsmotor 100 ist bezüglich des Anlenkbereichs 46 oder bezüglich der Drehachse D der Werkzeugaufnahme 19 exzentrisch angeordnet. Zur Kraftübertragung zwischen einem Abtrieb 81 des Antriebsmotors 100 ist das Getriebe 80 vorgesehen. Das Getriebe 80 umfasst beispielsweise eine Anordnung von mehreren Zahnrädern, die eine Drehzahländerung, insbesondere eine Drehzahlreduzierung, und/oder eine Kraftumlenkung vom Abtrieb 81 zur Werkzeugaufnahme 19 bewirken. Vorliegend ist ein rein rotatorisches Übertragungskonzept vorgesehen, das heißt die Werkzeugaufnahme 19 dreht ausschließlich um die Drehachse D. Möglich wäre aber auch eine beispielsweise exzentrische Bewegung exzentrisch zur Drehachse D, was jedoch in der Zeichnung nicht dargestellt ist und eine andere Ausführungsform darstellen würde. Ferner wäre auch eine Rotationsbewegung der Werkzeugaufnahme 19 mit überlagerter exzentrischer Bewegung ohne weiteres möglich, beispielsweise wenn ein geeignetes Übertragungsgetriebe anstelle oder in Ergänzung des Getriebes 80 vorhanden wäre. Schließlich ist ein so genannter hyperzykloider Bewegungsmodus der Werkzeugaufnahme 19 ebenfalls durch ein entsprechendes Getriebe möglich.

Der Abtrieb 81 kämmt mit einem Zahnrad 82, welches eine Welle 84 antreibt, mit der das Zahnrad 82 drehfest verbunden ist. Weiterhin ist mit der Welle 84 ein Zahnrad 83 drehfest verbunden, welches seinerseits mit einem Abtriebsrad 85 kämmt. Das Abtriebsrad 85 ist drehfest an einer Welle 86 angeordnet, an deren freiem Endbereich die Werkzeugaufnahme 19 drehfest angeordnet ist.

Die Anordnung der Zahnräder 82, 83, 85 bewirkt eine Drehzahlreduzierung und zudem auch eine Kraftumlenkung, da die Drehachse des Abtriebs 81 und der Welle 86 nicht koaxial sind.

Die Welle 84 ist mit Lagern 87 drehbar einerseits bezüglich des Trägerkörpers 16 und andererseits bezüglich eines mit dem Trägerkörper 16 verbundenen Getriebegehäuses 90 gelagert. Der Trägerkörper 16 bildet einen Deckel für das Getriebegehäuse 90. Beispielsweise sind am Trägerkörper 16 und dem Getriebegehäuse 90 Lageraufnahmen 91 für die insbesondere als Wälzlager, bevorzugt Kugellager, ausgeführten Lager 87 vorgesehen.

Die Welle 86 ist über ein weiteres Lager 87 bezüglich des Trägerkörpers 16 und ein Lager 88, das in einer Lageraufnahme 92 des Lagergehäuses 90 aufgenommen ist, bezüglich des Lagergehäuses 90 drehbar gelagert. Somit sind die jeweiligen Längsendbereiche der Wellen 86, 84 mit Drehlagern an einem Schutzgehäuse gelagert.

Das Getriebegehäuse 90 weist eine Platte 96 auf, an der die Lageraufnahmen 91, 92 vorgesehen sind. Die Lageraufnahme 92 ist an ihrer der Werkzeugaufnahme 19 zugewandten Unterseite mit einem die Lageraufnahme 92 umgebenden Dichtrand 93 versehen, so dass das Getriebegehäuse 90 das Getriebe 80 von unten her dicht kapselt. Das Lager 88 liegt am Dichtrand 93 mit beispielsweise einer zusätzlichen Dichtung staubdicht an.

Die oberseitige Kapselung des Getriebes 80 ist zweckmäßigerweise durch den Tragkörper 16 realisiert. Der Tragkörper 16 weist beispielsweise in der Zeichnung nicht sichtbare Steckaufnahmen auf, in welche Steckvorsprünge oder Schraubdome 95 des Getriebegehäuses 90 von unten her eingreifen. Ein Randbereich 97 des Getriebegehäuses 90 ist beispielsweise mit einer Dichtung versehen, sodass er an einem Dichtbereich 98, beispielsweise einer Dichtkante, des Tragkörpers 16 dicht anliegt.

Der Tragkörper 16 trägt also zur Kapselung des Getriebes 80 bei. Nach oben hin dichtet er das Getriebegehäuse 80 nahezu vollständig ab, abgesehen von einer Motoraufnahme 89, in welcher der Antriebsmotor 100 aufgenommen ist. Der Tragkörper 16 bildet beispielsweise ein Gehäuseteil des Getriebegehäuses 80, insbesondere eine Gehäuseschale.

Vor den Tragkörper 16 stehen Tragvorsprünge 99, beispielsweise Arme, seitlich vor, beispielsweise vier Tragvorsprünge 99, an denen jeweils Bolzenaufnahmen oder Montageaufnahmen 94 zur Aufnahme von Montageelementen 94B zur Verbindung mit der Abdeckung 21 vorstehen.

An dem Getriebegehäuse 90 ist ferner der Absauganschluss 23 vorgesehen. Der Absauganschluss 23 steht vor den Tragkörper 16 seitlich vor.

Der Antriebsmotor 100 ist ähnlich wie das Getriebe 80 optimal gegen Staub geschützt, was nachfolgend deutlich wird. Der Antriebsmotor 100 weist beispielsweise einen Rotor 101 auf, der in einem Stator 110 aufgenommen ist. Der Antriebsmotor 100 ist ein bürstenloser, elektronisch kommutierter Motor, der durch die Bestromungseinrichtung 40 bestrombar ist.

Der Rotor 101 umfasst eine Motorwelle 102, an der ein Blechpaket 103 angeordnet ist. Vor das Blechpaket 103 vorstehende Längsenden der Motorwelle 102 sind mit einem Motorlager 104 und einem Abtriebslager 105, beispielsweise Wälzlagern und/oder Gleitlagern, bezüglich des Stators 110 drehbar gelagert.

An einem freien Endbereich der Motorwelle 102, z.B. beim Motorlager 104, ist eine Lüfterhalterung 108 zum Halten eines Lüfterrads 109 vorgesehen.

Ein Lüfterrad 109 und die Werkzeugaufnahme 19 sind an einander entgegengesetzten Seiten des Antriebsmotors 100 angeordnet.

Das Lüfterrad 109 realisiert eine Drucklüftung, d.h. Luft wird durch die Einströmöffnung 25 durch das Lüfterrad 109 sozusagen angesaugt, durchströmt den Stator 110 und tritt an der zum Lüfterrad 109 entgegengesetzten Seite des Stators 110, im Bereich des Abtriebslagers 105, aus dem Stator 110 aus und strömt weiter zum Luftauslassbereich 18.

Der Stator 110 umfasst einen Statorkörper 111, der an einem Lagerdeckel 125A eine Lageraufnahme 112 aufweist, in welcher das Motorlager 104 aufgenommen ist. Die Motorwelle 102 durchdringt beispielsweise eine Durchtrittsöffnung 113 des Stators 110 und ist mit einem Endbereich an dem Motorlager 104 gehalten. Der Lagerdeckel 125A ist beispielsweise mit dem Statorkörpers 111 einstückig, könnte aber auch als vom Statorkörper 111 lösbar verbundenes Bauteil ausgestaltet sein, so wie der später noch erläuterte Lagerdeckel 125.

Neben der Durchtrittsöffnung 113 ist ein Vorsprung 114 vorgesehen, der in eine Nut 106 am Rotor 101, beispielsweise am Blechpaket 103, eingreift. Dadurch ist eine gewisse Labyrinthstruktur geschaffen, die zur Dichtigkeit des Antriebsmotors 100 beiträgt. Das Blechpaket 103 ist in einer Rotoraufnahme 115 des Statorkörpers 111 aufgenommen.

Der Statorkörper 111 besteht beispielsweise aus einem Kunststoffmaterial. An Trägern 116 des Statorkörpers 111 sind Spulen 121 einer Erregerspulenanordnung 120 angeordnet. Radial außen an den Trägern 116 erstreckt sich eine Umfangswand 117, beispielsweise aus Kunststoffmaterial, des Stators 110.

Eine Basis der Träger 116 wird beispielsweise vom Material eines Blechpakets 111B gebildet, das mit dem Kunststoffmaterial zur Ausbildung des Statorkörpers 111 umspritzt ist.

Die Erregerspulenanordnung 120 weist Anschlüsse 122, 123 sowie 124 auf, die mit den Leitern L1, L2, L3 elektrisch verbunden sind. Die Anschlüsse 122-124 sind Phasen P1, P2 und P3 der Erregerspulenanordnung 120 zugeordnet. Die Anschlüsse 122-124 sind beispielsweise an einer Stirnseite des Statorkörpers 111, insbesondere der Umfangswand 117, angeordnet.

Die Rotoraufnahme 115 ist durch einen Lagerdeckel 125 verschlossen, der in das Motorgehäuse 24 eingebunden werden kann. Der Lagerdeckel 125 weist beispielsweise eine Bodenwand 133 auf, von der ein Verschlussvorsprung 126 zum Verschließen der Rotoraufnahme 115 vorsteht. Der Verschlussvorsprung 126 weist einen Vorsprung 127 auf, der in eine Nut 107 des Rotors 101, nämlich am Blechpaket 103, eingreift. Dadurch ist eine labyrinthartige Abdichtung oder sind Labyrinthdichtungen 118 realisiert. Die Vorsprünge 114, 127 sind beispielsweise Ringvorsprünge, während die Nuten 106, 107 Ringnuten sind. Die Nuten 106, 107 sind beispielsweise an einander entgegengesetzten Stirnseiten des Blechpakets 103 vorgesehen.

Die Bodenwand 133 und der Verschlussvorsprung 126 dichten den Antriebsmotor 100 an seiner Stirnseite beim Motorlager 105 ab. Auch eine Wand 17 des Getriebegehäuses 80, die beispielsweise ein Bestandteil des Tragkörpers 16 sein kann, bildet eine den Antriebsmotor 100 stirnseitig verschließende Wand.

Im Bereich des Verschlussvorsprungs 126 ist weiterhin eine Aufnahme 128 für ein Lageraufnahmeelement 130 angeordnet. Das Lageraufnahmeelement 130 weist eine Lageraufnahme 131 für das Abtriebslager 105 auf. Das Lageraufnahmeelement 130 ist beispielsweise in ein Gewinde 129 der Aufnahme 128 eingeschraubt oder mit entsprechenden Rastkonturen in der Aufnahme 128 verrastet. In dem Lageraufnahmeelement 130 ist weiterhin eine Dichtscheibe 132 oder ein sonstiges abdichtendes Element gehalten. Die Dichtscheibe 132 hält das Abtriebslager 105 in der Lageraufnahme 131.

Zwischen den Trägern 116 des Statorkörpers 111 und somit zwischen den Spulen 121 sind Kühlkanäle 119 vorgesehen, durch die die Kühlluft K den Stator 110 und somit die Erregerspulenanordnung 120 durchströmen kann. Die Kühlluft K strömt an einer von der Werkzeugaufnahme 19 abgewandten Seite des Antriebsmotors 100 in die Kühlkanäle 119 ein und an der der Werkzeugaufnahme 19 zugewandten Seite des Antriebsmotors 100 aus den Kühlkanälen 119 aus. Dort wird sie durch eine Bodenwand 133 des Lagerdeckels 125 nach radial außen abgelenkt und strömt durch einen Strömungsraum 134 zu einer Umfangswand 135 des Deckels 130, an der der Luftauslassbereich 18 vorgesehen ist. Beispielsweise sind an der Umfangswand 135 Rippen 136 vorgesehen, zwischen denen Abstände oder Ausströmöffnungen 137 vorhanden sind, durch die die Kühlluft K aus dem Motorgehäuse 24 ausströmen kann. Der Strömungsraum 134 ist zwischen der Umfangswand 135 und der Umfangswand 117 vorgesehen. Zwischen der Umfangswand 117 und der Umfangswand 135 erstrecken sich vorteilhaft Stützrippen oder Stützwände 138. An den Stützwänden 138 sind vorteilhaft Leiteraufnahmen 139 zur Aufnahme oder zum Halten der Leitungen L1, L2 und L3 vorgesehen.

Das Kabel 42 ist über einen Einlass 140 an der Umfangswand 135 in den Strömungsraum 134 eingeführt. Aus dem Kabel 42 sind die einzelnen Leitungen L1, L2 und L3 herausgeführt und an den Stützwänden 138, nämlich den Leiteraufnahmen 139, gehalten und mit den Anschlüssen 122-124 der Erregerspulenanordnung 120 verbunden.

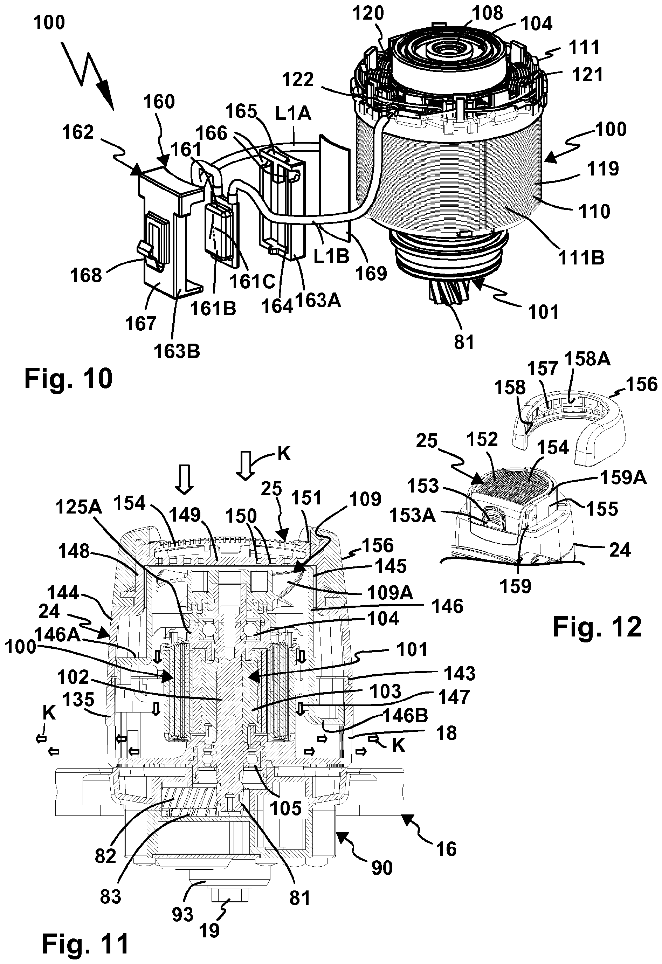

In Figur 11 wird deutlich, dass die Bodenwand 133 oberhalb des Trägerkörpers 16 verläuft und die Umfangswand 135 sozusagen vor den Trägerkörper 16 vorsteht. Die Umfangswand 135 ist an ihrer oberen Stirnseite 141 mit einer Dichtkontur 142 versehen, die mit einer korrespondierenden Dichtkontur 143 einer Umfangswand 144 des Motorgehäuses 24 in Eingriff gelangt. Somit ist eine im Wesentlichen staubdichte Verbindung zwischen dem Motorgehäuse 24 und dem Lagerdeckel 125 gegeben.

In dem Motorgehäuse 24 ist ein Strömungsgehäuse oder Luftführungskörper 145 aufgenommen, der sich um den Antriebsmotor 100 erstreckt. Beispielsweise hat der Luftführungskörper 145 eine Wand 146, die einen Luftführungsbereich 147 um den Antriebsmotor 100 begrenzt. Die Wand 146 ist beispielsweise als eine Art Luftführungshülse und/oder Umfangswand und/oder als Strömungsgehäuse ausgestaltet. Durch den Luftführungsbereich 147, der auch Kanäle aufweisen kann, strömt jedenfalls die Kühlluft K am Außenumfang des Stators 110 entlang und kühlt diesen. Die Wand 146 ist beispielsweise im Bereich des Lüfterrads 109 zylindrisch und steht bis zum Lüfterrad 109 vor.

Die Wand 146 trägt also dazu bei, dass Lüfterschaufeln 109A des Lüfterrads 109 die Kühlluft K besonders effektiv zum Antriebsmotor 100 bzw. dem Stator 110 und dem Rotor 101 sozusagen drückt.

Der Luftführungskörper 145 hat an seinem von dem Lüfterrad 109 entfernten Längsendbereich (bezüglich einer Längsachse der Motorwelle 102) sich radial bezüglich der Motorwelle 102 von der Wand 146 nach außen erstreckende Stirnwandabschnitte 146A und 146B, die oberhalb des Luftauslassbereiches 18 verlaufen und so die Kühlluft K nach radial außen aus dem Motorgehäuse 24 lenken.

Bevorzugt ist vorgesehen, dass der Antriebsmotor 100 elektromagnetisch abgeschirmt ist. Beispielsweise kann der Luftführungskörper 145 als ein elektromagnetisch abschirmendes Gehäuse ausgestaltet sein. Dazu besteht der Luftführungskörper 145 beispielsweise aus Metall oder hat eine metallische Komponente. Aber auch das Motorgehäuse 24 kann in einer vorteilhaften Ausgestaltung der Erfindung elektromagnetisch abschirmend sein, beispielsweise mit einer elektrisch leitenden Schutzfolie oder Schutzschicht versehen sein.

Vorteilhaft sind die Leitungen L1-L3 in dem Kabel 42 in einer elektromagnetischen Abschirmung 177, insbesondere einem Geflecht, geführt. Die Abschirmung 177 ist vorzugsweise geerdet. Zur elektromagnetischen Verträglichkeit des Antriebsmotors 100 und der Hand-Werkzeugmaschine zehn insgesamt trägt bei, wenn die Abschirmung 177 mit Antriebsmotor 100 leitend verbunden ist, beispielsweise mit dem Stator 110, insbesondere dem Blechpaket 111B. An dieses kann die Abschirmung 177 beispielsweise anhand einer Feder leitend angelegt sein.

Das Motorgehäuse 24 weist im Bereich des Lufteinlasses oder der Einströmöffnung 25 eine Vorsprungswand 148 sowie eine Deckwand 149 auf. Die Deckwand 149 deckt sozusagen das Motorgehäuse 24 oben ab, wobei jedoch an der Deckwand 149 Luftdurchlässe oder Lufteinlässe 150 für die Kühlluft K vorhanden sind.

Im Bereich der Deckwand 149 ist eine Aufnahme 151 für ein Filterelement 152 vorgesehen, das in die Aufnahme 151 eingesetzt ist. Beispielsweise wird die Aufnahme 151 vom Innenumfang der Vorsprungswand 148 begrenzt. Das Filterelement 152 weist beispielsweise ein Filtergewebe 154 oder eine sonstige engmaschige Filterstruktur auf, die oberhalb der Lufteinlässe 150 angeordnet ist. Somit werden Verschmutzungen, beispielweise Stäube oder dergleichen, die in der Kühlluft K enthalten sind, durch das Filterelement 152 gefiltert.

Das Filterelement 152 ist zweckmäßigerweise anhand von Rastmitteln 153, beispielweise umfassend eine federnde Raste oder dergleichen, am Motorgehäuse 24 verrastet. Die Rastmittel 153 bilden Bestandteile einer Halterung 153A.

An einem oberen, freien Endbereich des Motorgehäuses 24 ist eine Aufnahme 155 für einen Schutzkörper 156 vorgesehen. Während das Motorgehäuse 24 aus einem relativ harten Kunststoff besteht, so dass es eine optimale Schutzwirkung für den Antriebsmotor 100 entfalten kann, ist der Schutzkörper 156 vergleichsweise nachgiebig oder elastisch. Der Schutzkörper 156 ist beispielsweise in der Art einer Spange ausgestaltet. Der Schutzkörper 156 federt Stöße, die auf den Bearbeitungskopf 11 einwirken können und somit prinzipiell den Antriebsmotor 100 beschädigen würden, optimal ab.

Bevorzugt ist es, wenn der Schutzkörper 156 biegeflexibel ist. Der Schutzkörper 156 ist zwar an sich hufeisenförmig oder U-förmig, kann jedoch gebogen werden. Somit ist es beispielsweise möglich, an seinen freien Endbereichen angeordnete Halteaufnahmen 158 in Haltevorsprünge 159 des Motorgehäuses 24 sozusagen einzuhängen. Vorteilhaft ist es, wenn der Schutzkörper 156 zu dem noch weitere Haltekonturen hat, zum Beispiel einen Haltevorsprung 158A, der an einer Seitenkante entlang verläuft und in eine entsprechende, beispielsweise U-förmige, Halteaufnahme 159A des Motorgehäuses 24 eingehakt werden kann.

Der Antriebsmotor 100 ist mit einer Schutzschaltung 160 versehen, die vor Ort, nämlich am Bearbeitungskopf 11, den Antriebsmotor 100 vor Überhitzung oder sonstiger Beschädigung schützt.

Die Schutzschaltung 160 weist beispielsweise einen Trennschalter 161 auf. Prinzipiell wäre es möglich, den Trennschalter 161 unmittelbar in das Motorgehäuse oder jedenfalls den Stator 110 des Antriebsmotors 100 zu integrieren. Vorliegend ist jedoch ein montagefreundliches, leicht nachrüstbares oder austauschbares Konzept gewählt, bei dem der Trennschalter 161 außerhalb des Stators 110, jedoch in direktem Kontakt mit diesem angeordnet ist.

Der Trennschalter 161 umfasst einen thermisch betätigbaren Schalter oder ist dadurch gebildet, wobei der thermisch betätigbare Schalter bei einer Erwärmung des Stators 110 über eine vorbestimmte Temperatur hinaus in eine Trennstellung geht, ansonsten jedoch eine Verbindungsstellung einnimmt. In der Verbindungsstellung verbindet der Trennschalter 161 den Leiter L1 mit dem einer Phase der Erregerspulenanordnung 120 zugeordneten Anschluss 122, während er in der Trennstellung den Leiter L1 von Anschluss 122 und somit der Phase P1 der Erregerspulenanordnung 120 trennt.

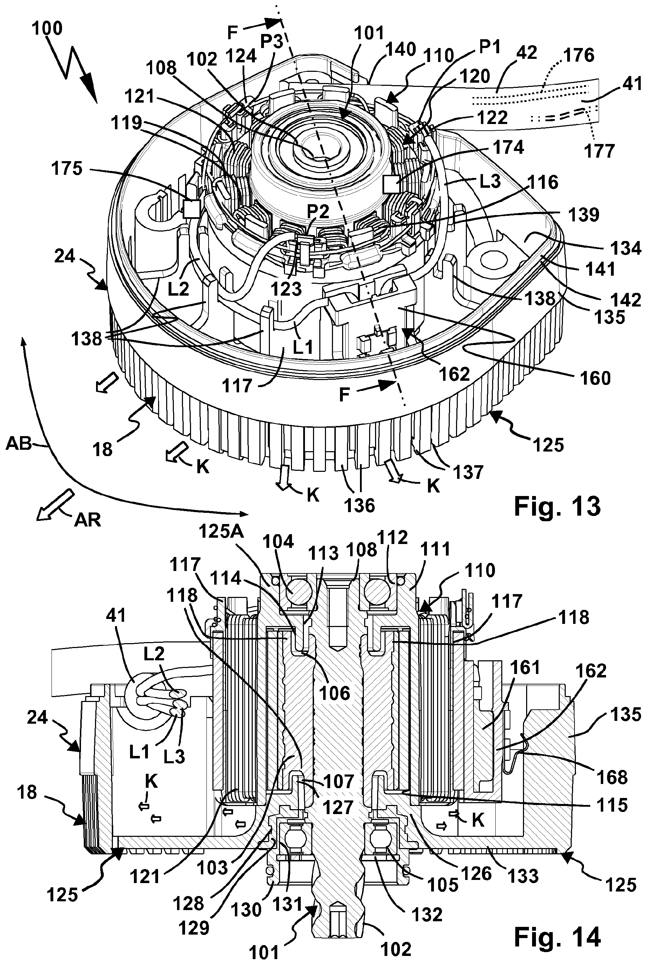

Der Trennschalter 161 ist zweckmäßigerweise in einem Schutzgehäuse 162 angeordnet, welches ein Gehäuseteil 163A und ein Gehäuseteil 163B aufweist. Das Schutzgehäuse 162 haust den Trennschalter 161 zweckmäßigerweise vollständig ein. Es wäre möglich, dass wie in Figur 13 dargestellt das Schutzgehäuse 162 an seiner Oberseite offen ist, sodass Luft zum Trennschalter 161 gelangen kann. Bevorzugt ist jedoch das Schutzgehäuse 163 vollständig geschlossen, sodass der Trennschalter 161 besonders empfindlich und schnell auf Temperaturänderungen, insbesondere zu hohe Temperaturen, reagieren kann.

Das Schutzgehäuse 162 begrenzt beispielsweise eine Aufnahme 164, zum Beispiel eine Kammer, in welcher der Trennschalter 161 angeordnet ist. Die Gehäuseteile 163A, 163B sind beispielsweise miteinander verrastet, wofür Rastkonturen 165 vorhanden sind.

Das Gehäuseteil 163B bildet einen thermischen Isolator, der den Trennschalter 161 vor Wärmeeinfluss von außen auf den Antriebsmotor 100 schützt, so das Trennschalter 161 durch derartigen Wärmeeinfluss nicht fehl-betätigt wird.

Das Gehäuseteil 163A hingegen ist thermisch leitfähig, sodass vom Stator 110 her kommende Wärme den Trennschalter 161 betätigen kann. Eine vorteilhafte Maßnahme stellt es dar, wenn zusätzlich noch ein Wärmeleitelement 169 angeordnet ist, beispielsweise ein sogenanntes Wärmeleit-Pad, welches die Wärme vom Stator 110 in Richtung des Schutzgehäuses 162 und somit zum Trennschalter 161 leitet.

Das Wärmeleitelement 169 hat vorzugsweise eine Geometrie und Flächenausdehnung, die der Geometrie und Flächenausdehnung einer dem Stator 110 zugewandten Stirnseite des Schutzgehäuses 162 entspricht.

Das Wärmeleitelement 169 gleicht zudem Unebenheiten des Schutzgehäuses 162 und/oder des Stators 110 aus, was vorteilhaft die Wärmeübertragung vom Stator 110 zum Trennschalter 161 verbessert.

Eine weitere vorteilhafte Maßnahme sieht vor, dass eine Feder 168, also eine Federanordnung, dazu vorgesehen ist, den Trennschalter 161 in Richtung des Stators 110 zu belasten. Die Feder 168 ist beispielsweise an dem Gehäuseteil 163B angeordnet, insbesondere dessen Frontwand.

Seitlich am Schutzgehäuse 162 sind Leiterdurchlässe 166 für einen Teilabschnitt L1A des Leiters L1 und einen mit dem Anschluss 122 verbundenen Leiterabschnitt L1B vorgesehen.

Der Trennschalter 161 weist vorteilhaft zu dem ein ihn kapselndes Gehäuse 161B auf, in welchem seine elektromechanischen Komponenten, insbesondere ein Bimetall-Streifen 161C, elektrische Kontakte und dergleichen, elektrisch isoliert eingehaust sind. Das Gehäuse 161B ist vorzugsweise staubdicht. Das Gehäuse 161B weist beispielsweise elektrische Kontakte zum Anschließen der Leiterabschnitte L1A und L1B auf. Bei Wärmeeinwirkung oder Kälteeinwirkung bewegt sich der Bimetall-Streifen 161C zwischen den in Figur 10 schematisch eingezeichneten Stellungen hin und her, wobei er eine elektrische Verbindung herstellt oder trennt.

Wenn der Trennschalter 161 in seine Trennstellung geht, fließt kein Strom mehr über die Leitungen L1. Dies kann die Stromüberwachungseinrichtung 171 der Bestromungseinrichtung 40 ermitteln und an die Steuerung 170 melden. Die Steuerung 170 schaltet dann insgesamt die Bestromungseinrichtung 40 ab der Art, dass kein Strom mehr über die Leitungen L1-L3 fließt. Somit erfasst sozusagen die Steuerung 170 dezentral eine Störung am Antriebsmotor 100. Dort ist lediglich der Trennschalter 161 als Sicherheitsmaßnahme erforderlich. Auf diesem Weg werden beispielsweise Datenübertragungsleitungen eingespart, die ansonsten vom Bearbeitungskopf 11 über das Handgriffelement 12 zur Steuerung 140 geführt werden müssten. Die Steuerung 170 arbeitet vorzugsweise sensorlos, d.h. ohne eine vom Antriebsmotor 100 her kommende Drehwinkelinformation eines dort angeordneten Drehwinkelsensors.

Selbstverständlich ist es grundsätzlich möglich, dass beispielsweise ein Drehwinkelsensor 174 am Antriebsmotor 100 angeordnet ist, der die jeweilige Drehwinkelposition oder Drehzahl des Rotors 101 erfasst und über eine Datenleitung 176, die vorzugweise im Handgriffelement 12 verläuft (in Figur 13 schematisch angedeutet), an die Steuerung 170 meldet. Auf diese Weise ist auch möglich, dass die Steuerung 170 eine jeweilige Drehwinkelposition des Rotors 101 auswertet und anhand dieser mindestens einen Drehwinkelinformation die Erregerspulenanordnung 120 bestromt.

Es versteht sich, dass auch andere oder weitere Trennschalter beim Antriebsmotor 100 vorteilhaft sein können, so zum Beispiel ein einen Stromfluss auf der Leitung L2 erfassender Stromschalter 175, der bei einem Stromfluss, der über einem vorbestimmten Stromwert liegt, die Leitung L2 von der Phase P2 trennt. Ohne weiteres möglich wäre es, dass der Stromschalter 175 in Reihe mit dem Trennschalter 161 beispielsweise an der Leitung L1 angeordnet ist.

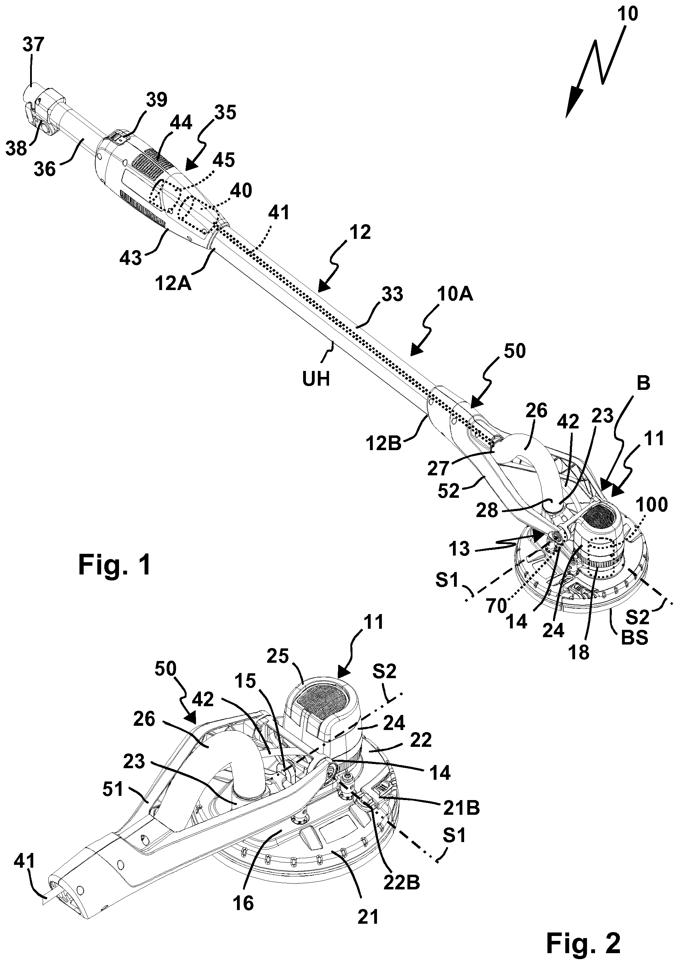

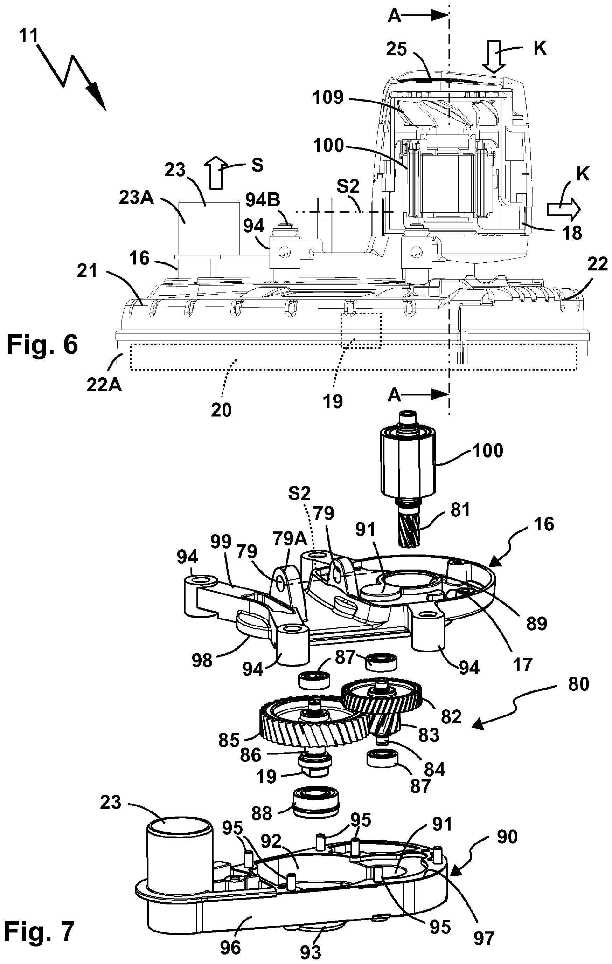

Der Griffstab oder das Handgriffelement 12 ist beim Ausführungsbeispiel gemäß Figuren 1-15 einstückig, das heißt dass beispielsweise sogar die Kanalkörper 33, 36 Bestandteile eines insgesamt durchgehenden Rohrkörpers sein können.

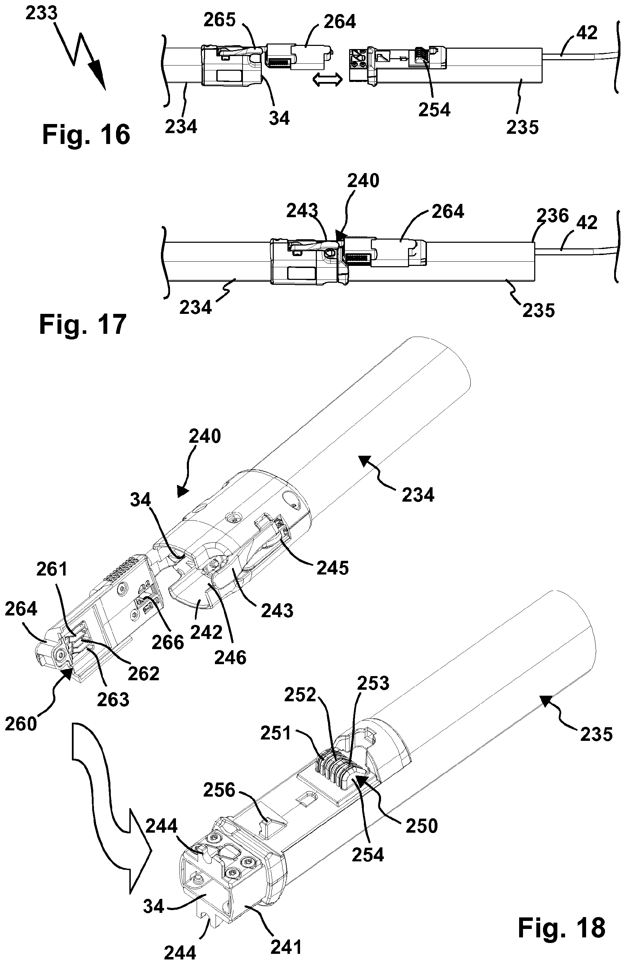

Ohne weiteres ist aber auch ein mehrteiliges Handgriffelement möglich, was anhand der Figuren 16-18 deutlich wird. Beispielsweise kann anstelle des Kanalkörpers 33 ein zweiteiliger Kanalkörper 233 vorgesehen sein. Der Kanalkörper 233 weist beispielsweise Segmente 234, 235 auf. Die Segmente 234, 235 können beispielsweise voneinander gelöst werden (Figur 16).

In den Segmenten 234, 235 verläuft der Strömungskanal 34.

An einem Endbereich 236 des Segments 35 ist beispielsweise das Kabel 42 aus dem Kanalkörper 233 herausgeführt.

Das Kabel 42 umfasst die Leitungen L1-L3, d.h. insgesamt drei stromführende Leitungen, die entlang des Kanalkörpers 233 zur Bestromungseinrichtung 40 führen und an der Trennstelle zwischen den Segmenten 234 und 235 lösbar miteinander verbindbar sind.

Die Segmente 234, 235 sind lösbar miteinander verbindbar, sodass sie von der in Figur 16 dargestellten einander getrennten Stellung in eine in Figur 17 dargestellte miteinander verbundene Stellung gebracht werden können. Zum lösbaren Verbinden der Segmente 234, 235 dient eine Verbindungseinrichtung 240. Die Verbindungseinrichtung 240 umfasst beispielsweise einen am Segment 235 vorgesehenen Verbindungsvorsprung 241, der beispielsweise stumpf mit einem Verbindungsvorsprung 242 am Segment 234 verbindbar ist. Dann ist ein durchgehender Strömungskanal 34 realisiert. Der Strömungskanal 34 verläuft nämlich durch den Steckvorsprung 241 und die Steckaufnahme 242 hindurch.

Alternativ oder ergänzend ist auch eine Steckverbindung möglich, d.h. dass beispielsweise der Verbindungsvorsprung 241 einen Steckvorsprung und der Verbindungsvorsprung 242 eine Steckaufnahme aufweisen, die ineinander einsteckbar sind.

Die Verbindungseinrichtung 240 umfasst ferner Haltemittel in Gestalt von beweglich am Segment 234 gelagerten Haltern 243, die mit Halteaufnahmen oder Haltevorsprüngen 244 am Segment 235 in Eingriff gebracht werden können. Die Halter 243 sind beispielsweise an Lagern 245 schwenkbar gelagert, sodass sie von den Haltevorsprüngen 244 weg und somit außer Eingriff von diesen geschwenkt werden können.

Bevorzugt ist es, wenn die Haltevorsprünge 244 in Aussparungen oder sonstige Halteaufnahmen am Segment 234 eingreifen können. Somit ist ein zusätzlicher Formschluss zwischen den Segmenten 234, 235 realisiert.

Zur elektrischen Verbindung zwischen den Segmenten 234, 235 dienen elektrische Kontaktanordnungen 250, 260, die lösbar miteinander verbindbar sind. Die Kontaktanordnung 250 umfasst beispielsweise Kontakte 251, 252, 253, die den Leitern L1-L3 zugeordnet und mit diesen verbunden sind. Beispielsweise sind die Kontakte 251-253 an einem Kontaktträger 254 angeordnet, insbesondere in Vertiefungen oder anderweitig mechanisch geschützt. Der Kontaktträger 254 ist beispielsweise in der Art eines Vorsprungs oder kammartig ausgestaltet.

Die Kontaktanordnung 260 umfasst korrespondierende Kontakte 261-263, die ebenfalls den Leitungen oder Leitern L1-L3 zugeordnet sind. Die Kontaktanordnung 260 ist an einem Kontaktträger 264 angeordnet, welcher anhand eines Schwenklagers 265 schwenkbar am Segment 234 gelagert ist. Beispielsweise ist der Kontaktträger 264 mit dem Halter 243 des Segments 234 einstückig oder bewegungsgekoppelt. Somit können die Kontakte 261-263 von den Kontakten 251-254 zur elektrischen Trennung weg oder zur elektrischen Verbindung zu diesen hin geschwenkt werden.

Eine Halteaufnahme 266 am Kontaktträger 264 kann zur zusätzlichen Sicherung dieser Verbindung zwischen den Segmenten 234, 235 bzw. den Kontakten 261-263 mit den Kontakten 251-254 in Eingriff mit einem Haltevorsprung 256 am Segment 235 gebracht werden.

Die Verbindung zwischen den Segmenten 234 und 235 kann durch zusätzliche Rastmittel, Schraubmittel oder dergleichen gesichert werden.

Man erkennt in diesem Zusammenhang den Vorteil des Sicherungskonzepts mit der Schutzschaltung 160 und dem Trennschalter 161, weil nämlich die Kontaktanordnungen 250 und 260 nur insgesamt 3 Kontaktpaare, nämlich für die Leitungen L1, L2 und L3, benötigen.

Gemäß einem nicht nur bei dem konkreten Ausführungsbeispiel vorteilhaften Konzept ist vorgesehen, dass eine Einströmöffnung für einen Kühlluftstrom und eine eine Werkzeugaufnahme (vorliegend 19) aufweisende Bearbeitungsseite BS an einander entgegengesetzten Seiten, insbesondere Stirnseiten, eines Motorgehäuses (hier 25) oder eines Maschinengehäuses angeordnet sind.

Eine Ausströmrichtung für den Kühlluftstrom K verläuft zweckmäßigerweise quer zur Bearbeitungsebene E.

## Patentansprüche

1. Hand-Werkzeugmaschine, insbesondere Schleifmaschine, mit einem stabförmigen Handgriffelement (12) zum Ergreifen durch einen Bediener und einem über eine Gelenkanordnung (13) an dem Handgriffelement (12) beweglich gelagerten Bearbeitungskopf (11), der einen elektrischen Antriebsmotor (100) zum Antreiben einer Werkzeugaufnahme (19) zum Halten eines Bearbeitungswerkzeugs (20) aufweist, wobei in einer Basisposition des Bearbeitungskopfs (11) eine Unterseite des Handgriffelements (12) und eine Bearbeitungsseite des Bearbeitungskopfs (11) einem Werkstück (W) zugewandt sind, wobei die Gelenkanordnung (13) mit dem Bearbeitungskopf (11) an einem Anlenkbereich des Bearbeitungskopfs (11) verbunden ist, wobei zwischen dem Handgriffelement (12) und dem Bearbeitungskopf (11) ein flexibler Absaugschlauch (26) zur Durchleitung eines Saugstroms (S) vom Bearbeitungskopf (11) zu dem Handgriffelement (12) verläuft, der mit einem ersten Schlauchende an einem Endbereich des Handgriffelements (12) und mit einem zweiten Schlauchende an einem Absauganschluss (23) des Bearbeitungskopfs (11) festgelegt ist, und wobei der Absauganschluss (23) in der Basisposition zwischen dem Endbereich des Handgriffelements (12) und dem Anlenkbereich des Bearbeitungskopfs (11) angeordnet ist, **dadurch gekennzeichnet, dass** die Gelenkanordnung (13) eine erste Schwenkachse und eine zweite Schwenkachse aufweist, die zueinander winkelig, insbesondere rechtwinkelig sind.

2. Hand-Werkzeugmaschine nach Anspruch 1, **dadurch gekennzeichnet, dass** der Absaugschlauch (26) zumindest abschnittsweise geschützt neben einem insbesondere einen Bestandteil der Gelenkanordnung (13) bildenden Tragarm verläuft, der von dem Handgriffelement (12) absteht und an dem der Bearbeitungskopf (11) gehalten ist.

3. Hand-Werkzeugmaschine nach Anspruch 1 oder 2, **dadurch gekennzeichnet, dass** an dem den Bearbeitungskopf (11) haltenden Endbereich des Handgriffelements (12) eine Gabel (50) angeordnet ist, die Gabelarme (51, 52) aufweist, an denen der Bearbeitungskopf (11) gehalten ist und zwischen oder neben denen der Absaugschlauch (26) verläuft.

4. Hand-Werkzeugmaschine nach Anspruch 2 oder 3, **dadurch gekennzeichnet, dass** in der Basisposition mindestens ein Abschnitt des Absaugschlauchs (26), insbesondere einander entgegengesetzte Abschnitte des Absaugschlauchs (26), seitlich vor den Tragarm oder die Gabelarme (51, 52) vorsteht.

5. Hand-Werkzeugmaschine nach einem der vorhergehenden Ansprüche, **dadurch gekennzeichnet, dass** die erste Schwenkachse quer, insbesondere rechtwinkelig quer, zu einer Längsachse des Handgriffelements (12) verläuft und die zweite Schwenkachse und die Längsachse des Handgriffelements (12) in einer gemeinsamen Ebene oder zueinander parallelen Ebenen angeordnet sind.

6. Hand-Werkzeugmaschine nach einem der vorhergehenden Ansprüche, **dadurch gekennzeichnet, dass** die Basisposition einen Bestandteil eines Basis-Arbeitsbereichs (AB) bildet, wobei der Bearbeitungskopf (11) relativ zu dem Handgriffelement (12) um mindestens eine Schwenkachse um einen Winkelbereich von insbesondere 15-30°, vorzugsweise 90°, insbesondere bis zu 180°, zu mindestens einer Seite, vorzugsweise beiden Seiten, der Basisposition auslenkbar ist.

7. Hand-Werkzeugmaschine nach einem der vorhergehenden Ansprüche, **dadurch gekennzeichnet, dass** der Absaugschlauch (26) an dem Endbereich des Handgriffelements (12) und/oder an dem Absauganschluss (23) zugfest und/oder schiebefest festgelegt ist und/oder dass der Absaugschlauch (26) an dem Endbereich des Handgriffelements (12) und/oder an dem Absauganschluss (23) drehbar gelagert oder drehfest festgelegt ist.

8. Hand-Werkzeugmaschine nach einem der vorhergehenden Ansprüche, **dadurch gekennzeichnet, dass** eine sich etwa in Strömungsrichtung des Saugstroms (S) erstreckende Längsachse des ersten Schlauchendes des Absaugschlauchs (26) mit einer sich entlang einer Längserstreckung des Handgriffelements (12) erstreckenden Längsachse des Handgriffelements (12) fluchtet und/oder eine sich etwa in Strömungsrichtung des Saugstroms (S) erstreckende Längsachse des zweiten Schlauchendes des Absaugschlauchs (26) parallel oder etwa parallel zu einer Drehachse der Werkzeugaufnahme (19) oder etwa rechtwinkelig zu einer an der Bearbeitungsseite des Bearbeitungskopfs (11) vorgesehenen Bearbeitungsebene (E), insbesondere einer Schleifebene, des Bearbeitungswerkzeugs (20) an dem Bearbeitungskopf (11) ist.

9. Hand-Werkzeugmaschine nach einem der vorhergehenden Ansprüche, **dadurch gekennzeichnet, dass** der Absaugschlauch (26) zwischen dem Handgriffelement (12) und dem Absauganschluss (23) des Bearbeitungskopfs (11), insbesondere in der Basisposition, zwei einander entgegensetzt gekrümmte Abschnitte aufweist und/oder dass der Anlenkbereich des Bearbeitungskopfs (11) zwischen dem Absauganschluss (23) und dem Antriebsmotor (100) vorgesehen ist.

10. Hand-Werkzeugmaschine nach einem der vorhergehenden Ansprüche, **dadurch gekennzeichnet, dass** der Absauganschluss (23) an einem Randbereich oder äußeren Umfangsbereich des Bearbeitungskopfs (11), insbesondere einer Absaughaube des Bearbeitungskopfs (11), angeordnet ist.

11. Hand-Werkzeugmaschine nach einem der vorhergehenden Ansprüche, **dadurch gekennzeichnet, dass** das Handgriffelement (12) einen Griffstab mit einer Längsachse umfasst und der Absaugschlauch (26) im Verbindungsbereich mit dem Endbereich des Handgriffelements (12) entlang der Längsachse verläuft und/oder dass das Handgriffelement (12) mindestens einen, insbesondere in einem zum Ergreifen des Handgriffelements (12) geeigneten biegesteifen Rohrkörper verlaufenden, Absaugkanal aufweist, der in Richtung einer Längsachse des Handgriffelements (12) verläuft und an seinem dem Bearbeitungskopf (11) zugewandten Endbereich des Handgriffelements (12) stirnseitig aus dem Handgriffelement (12) ausmündet und/oder dass das Handgriffelement (12) an seinem dem Bearbeitungskopf (11) zugewandten Endbereich ein Absaugrohr umfasst oder dadurch gebildet ist, mit welchem der Absaugschlauch (26) verbunden ist.

12. Hand-Werkzeugmaschine nach einem der vorhergehenden Ansprüche, **dadurch gekennzeichnet, dass** die Gelenkanordnung (13) ein Schiebelager zur linearen Verstellung des Bearbeitungskopfes (11) relativ zu dem Handgriffelement (12) und/oder eine Schwenklageranordnung (14, 15) umfasst oder dadurch gebildet ist, wobei der Bearbeitungskopf (11) anhand der Schwenklageranordnung (14, 15) relativ zu dem Handgriffelement (12) um zumindest eine Schwenkachse schwenkbar gelagert ist.

13. Hand-Werkzeugmaschine nach einem der vorhergehenden Ansprüche, **dadurch gekennzeichnet, dass** der Bearbeitungskopf (11) durch eine von dem Absaugschlauch (26) separate Positionierfederanordnung (70) in die Basisposition relativ zu dem Handgriffelement (12) belastet ist.

14. Hand-Werkzeugmaschine nach Anspruch 13, **dadurch gekennzeichnet, dass** die Positionierfederanordnung (70) eine erste Positionierfeder (71) und eine zweite Positionierfeder (71) umfasst, die den Bearbeitungskopf (11) gegensinnig und/oder voneinander entgegengesetzten Seiten und/oder mit einander entgegengesetztem Drehsinn in Richtung der Basisposition beaufschlagen, und/oder dass die Positionierfederanordnung (70) mindestens eine Positionierfeder (71) umfasst, die sich unmittelbar an Lagerelementen der Gelenkanordnung (13) abstützt und/oder die zwischen einem Längsende des Handgriffelements (12).

15. Hand-Werkzeugmaschine nach einem der Ansprüche 13 oder 14, **dadurch gekennzeichnet, dass** mindestens eine Positionierfeder (71) der Positionierfederanordnung (70) an einem Innenumfang oder einem Außenumfang eines Lagerwellenteils, insbesondere eines Lagerbolzens, angeordnet ist oder von dem Lagerwellenteil durchdrungen ist und/oder sich ringförmig um mindestens eine Schwenkachse (S1, S2) der Gelenkanordnung (13) erstreckt und/oder dass mindestens eine Positionierfeder (71) der Positionierfederanordnung (70) zumindest teilweise oder vollständig in einem Gehäuse, insbesondere einem Lagergehäuse eines Lagerelements der Gelenkanordnung, (13) eingehaust ist.

## Claims

1. Hand-held machine tool, in particular a sanding machine, having a rod-shaped handle element (12) for an operator to grasp and having a machining head (11) which is movably mounted on the handle element (12) by means of a joint assembly (13) and which has an electric drive motor (100) for driving a tool holder (19) for holding a machining tool (20), wherein a bottom side of the handle element (12) and a machining side of the machining head (11) face a workpiece (W) in a base position of the machining head (11), wherein the joint assembly (13) is connected to the machining head (11) in an articulated-connection region of the machining head (11), wherein a flexible suction hose (26) for conducting a suction flow (S) from the machining head (11) to the handle element (12) extends between the handle element (12) and the machining head (11), which suction hose is fastened to an end region of the handle element (12) by means of a first hose end and to a suction connection (23) of the machining head (11) by means of a second hose end, and wherein the suction connection (23) is arranged between the end region of the handle element (12) and the articulated-connection region of the machining head (11) in the base position, **characterised in that** the joint assembly (13) has a first pivot axis and a second pivot axis, at an angle, in particular at right angles, to each other.

2. Hand-held machine tool according to claim 1, **characterised in that** the suction hose (26) runs, protected at least in sections, next to a support arm, in particular forming a component of the joint assembly (13), which protrudes from the handle element (12) and on which the machining head (11) is held.

3. Hand-held machine tool according to claim 1 or 2, **characterised in that** on the end region of the handle element (12) holding the machining head (11) a fork (50) is arranged, having fork arms (51, 52), on which the machining head (11) is held and between which or next to which the suction hose (26) runs.

4. Hand-held machine tool according to claim 2 or 3, **characterised in that** at least one section of the suction hose (26), in particular opposing sections of the suction hose (26), protrudes laterally in front of the support arm or the fork arms (51, 52) in the base position.

5. Hand-held machine tool according to any one of the preceding claims, **characterised in that** the first pivot axis runs transversally, in particular at right angles to a longitudinal axis of the handle element (12) and the second pivot axis and the longitudinal axis of the handle element (12) are arranged in a common plane or in planes parallel to one another (12).

6. Hand-held machine tool according to any one of the preceding claims, **characterised in that** the base position forms a component of a basic working areas (AB), wherein the machining head (11) is able to pivot relative to the handle element (12) about at least one pivot axis through an angular range of in particular 15-30°, preferably 90°, in particular up to 180°, on at least one side, preferably both sides, of the base position.

7. Hand-held machine tool according to any one of the preceding claims, **characterised in that** the suction hose (26) is immobilised on the end region of the handle element (12) and/or on the suction connection (23) in a tensile-resistant and/or slip-resistant manner and/or **in that** the suction hose (26) is rotatably supported or immovably secured on the end region of the handle element (12) and/or to the suction connection (23).

8. Hand-held machine tool according to any one of the preceding claims, **characterised in that** a longitudinal axis of the first hose end of the suction hose (26) extending approximately in the direction of flow of the suction flow (S) is aligned to a longitudinal axis of the handle element (12) extending along a longitudinal extension of the handle element (12) and/or a longitudinal axis of the second hose end of the suction hose (26) extending approximately in the direction of flow of the suction flow (S) is parallel or approximately parallel to an axis of rotation of the tool holder (19) or approximately at right angles to a machining plane (E), provided on the machining head (11), in particular a sanding plane of the machining tool (20), on the machining head (11).

9. Hand-held machine tool according to any one of the preceding claims, **characterised in that** the suction hose (26), has two opposing curved sections between the handle element (12) and the suction connection (23) of the machining head (11), in particular in the base position and/or **in that** the articulated-connection region of the machining head (11) is provided between the suction connection (23) and the drive motor (100).

10. Hand-held machine tool according to any one of the preceding claims, **characterised in that** the suction connection (23) is arranged in an edge region or outer circumferential region of the machining head (11), in particular of an extraction hood of the machining head (11).

11. Hand-held machine tool according to any one of the preceding claims, **characterised in that** the handle element (12) comprises a grip rod with a longitudinal axis, and **in that** the suction hose (26) runs along the longitudinal axis in the connecting area with the end region of the handle element (12) and/or **in that** the handle element (12) has at least one suction channel, in particular running in a rigid tubular body suitable for gripping the handle element (12), running in the direction of a longitudinal axis of the handle element (12) and opening out at its end region of the handle element (12) facing towards the machining head (11) on the front face from the handle element (12) and/or **in that** the handle element (12) in its end region facing towards the machining head (11) comprises or is formed by a suction pipe, with which the suction hose (26) is connected.

12. Hand-held machine tool according to any one of the preceding claims, **characterised in that** the joint assembly (13) comprises or is formed by a sliding bearing for linear adjustment of the machining head (11) relative to the handle element (12) and/or a pivot bearing arrangement (14, 15), wherein the machining head (11) by means of the pivot bearing arrangement (14, 15) is supported so that it can pivot relative the handle element (12) about at least one pivot axis.

13. Hand-held machine tool according to any one of the preceding claims, **characterised in that** the machining head (11) is loaded by a positioning spring arrangement (70) separate from the suction hose (26) relative to the handle element (12) in the base position.

14. Hand-held machine tool according to claim 13, **characterised in that** the positioning spring arrangement (70) comprises a first positioning spring (71) and a second positioning spring (71), which impinge on the machining head (11) in opposite directions and/or on opposite sides and/or in an opposing direction of rotation in the direction of the base position, and/or **in that** the positioning spring arrangement (70) comprises at least one positioning spring (71), which is supported directly on bearing elements of the joint assembly (13) and/or which is between a longitudinal end of the handle element (12).

15. Hand-held machine tool according to any one of claims 13 or 14, **characterised in that** at least one positioning spring (71) of the positioning spring arrangement (70) is arranged on an inner periphery or an outer periphery of a bearing shaft part, in particular of a bearing pin, or is passed through by the bearing shaft part and/or extends in a circular manner about at least one pivot axis (S1, S2) of the joint assembly (13) and/or **in that** at least one positioning spring (71) of the positioning spring arrangement (70) is enclosed at least in part or completely in a housing, in particular a bearing housing of a bearing element of the joint assembly (13).

## Revendications

1. Machine-outil portative, en particulier rectifieuse, avec un élément de poignée (12) en forme de tige pour la saisie par un utilisateur et une tête d'usinage (11) logée de manière mobile par le biais d'un agencement d'articulation (13) au niveau de l'élément de poignée (12) qui présente un moteur d'entraînement (100) électrique pour l'entraînement d'un logement d'outil (19) pour le maintien d'un outil d'usinage (20), dans laquelle dans une position de base de la tête d'usinage (11), un côté inférieur de l'élément de poignée (12) et un côté d'usinage de la tête d'usinage (11) sont tournés vers une pièce à usiner (W), dans laquelle l'agencement d'articulation (13) est relié à la tête d'usinage (11) au niveau d'une zone d'articulation de la tête d'usinage (11), dans lequel entre l'élément de poignée (12) et la tête d'usinage (11), un tuyau d'aspiration flexible (26) s'étend pour acheminer un courant d'aspiration (S) de la tête d'usinage (11) à l'élément de poignée (12) qui est fixé à une première extrémité de tuyau à une zone d'extrémité de l'élément de poignée (12) et à une seconde extrémité de tuyau à un raccord d'aspiration (23) de la tête d'usinage (11), et dans laquelle le raccord d'aspiration (23) est agencé dans la position de base entre la zone d'extrémité de l'élément de poignée (12) et la zone d'articulation de la tête d'usinage (11), **caractérisée en ce que** l'agencement d'articulation (13) présente un premier axe de pivotement et un second axe de pivotement qui sont angulaires l'un à l'autre, en particulier à angle droit.

2. Machine-outil portative selon la revendication 1, **caractérisée en ce que** le tuyau d'aspiration (26) s'étend protégé au moins par sections à côté d'un bras porteur formant en particulier un constituant de l'agencement d'articulation (13) qui dépasse de l'élément de poignée (12) et au niveau duquel la tête d'usinage (11) est maintenue.

3. Machine-outil portative selon la revendication 1 ou 2, **caractérisée en ce qu'**une fourche (50) est agencée au niveau de la zone d'extrémité maintenant la tête d'usinage (11) de l'élément de poignée (12), laquelle présente des bras de fourche (51, 52), au niveau desquels la tête d'usinage (11) est maintenue et entre ou à côté desquels le tuyau d'aspiration (26) s'étend.

4. Machine-outil portative selon la revendication 2 ou 3, **caractérisée en ce que** dans la position de base, au moins une section du tuyau d'aspiration (26), en particulier des sections opposées l'une à l'autre du tuyau d'aspiration (26), dépasse latéralement du bras porteur ou des bras de fourche (51, 52).

5. Machine-outil portative selon l'une quelconque des revendications précédentes, **caractérisée en ce que** le premier axe de pivotement s'étend transversalement, en particulier à angle droit transversalement, à un axe longitudinal de l'élément de poignée (12) et le second axe de pivotement et l'axe longitudinal de l'élément de poignée (12) sont agencés dans un plan médian ou des plans parallèles les uns aux autres.

6. Machine-outil portative selon l'une quelconque des revendications précédentes, **caractérisée en ce que** la position de base forme un constituant d'une zone de travail de base (AB), dans laquelle la tête d'usinage (11) peut être déviée par rapport à l'élément de poignée (12) autour d'au moins un axe de pivotement d'une zone angulaire d'en particulier 15 à 30°, de préférence de 90°, en particulier jusqu'à 180°, vers au moins un côté, de préférence des deux côtés, de la position de base.

7. Machine-outil portative selon l'une quelconque des revendications précédentes, **caractérisée en ce que** le tuyau d'aspiration (26) est fixé de manière résistante à la traction et/ou résistante à la poussée à la zone d'extrémité de l'élément de poignée (12) et/ou au raccord d'aspiration (23) et/ou que le tuyau d'aspiration (26) est logé de manière rotative ou fixé de manière résistante à la rotation à la zone d'extrémité de l'élément de poignée (12) et/ou au raccord d'aspiration (23).

8. Machine-outil portative selon l'une quelconque des revendications précédentes, **caractérisée en ce qu'**un axe longitudinal s'étendant à peu près dans le sens d'écoulement du courant d'aspiration (S) de la première extrémité de tuyau du tuyau d'aspiration (26) s'aligne sur un axe longitudinal s'étendant le long d'une étendue longitudinale de l'élément de poignée (12) de l'élément de poignée (12) et/ou un axe longitudinal s'étendant à peu près dans le sens d'écoulement du courant d'aspiration (S) de la seconde extrémité de tuyau du tuyau d'aspiration (26) est parallèle ou à peu près parallèle à un axe de rotation du logement d'outil (19) ou à peu près à angle droit à un plan d'usinage (E) prévu sur le côté d'usinage de la tête d'usinage (11), en particulier un plan de rectification, de l'outil d'usinage (20) au niveau de la tête d'usinage (11).

9. Machine-outil portative selon l'une quelconque des revendications précédentes, **caractérisée en ce que** le tuyau d'aspiration (26) présente entre l'élément de poignée (12) et le tuyau d'aspiration (23) de la tête d'usinage (11), en particulier dans la position de base, deux sections courbées de manière opposée l'une à l'autre et/ou que la zone d'articulation de la tête d'usinage (11) est prévue entre le raccord d'aspiration (23) et le moteur d'entraînement (100).

10. Machine-outil portative selon l'une quelconque des revendications précédentes, **caractérisée en ce que** le raccord d'aspiration (23) est agencé au niveau d'une zone de bord ou zone périphérique extérieure de la tête d'usinage (11), en particulier d'une hotte aspirante de la tête d'usinage (11).

11. Machine-outil portative selon l'une quelconque des revendications précédentes, **caractérisée en ce que** l'élément de poignée (12) comporte une barre de préhension avec un axe longitudinal et le tuyau d'aspiration (26) s'étend dans la zone de liaison avec la zone d'extrémité de l'élément de poignée (12) le long de l'axe longitudinal et/ou que l'élément de poignée (12) présente au moins un canal d'aspiration s'étendant en particulier dans un corps tubulaire rigide à la flexion approprié à la préhension de l'élément de poignée (12), qui s'étend en direction d'un axe longitudinal de l'élément de poignée (12) et débouche côté avant de l'élément de poignée (12) au niveau de sa zone d'extrémité tournée vers la tête d'usinage (11) de l'élément de poignée (12) et/ou que l'élément de poignée (12) comporte au niveau de sa zone d'extrémité tournée vers la tête d'usinage (11) un tube d'aspiration ou est formé par celui-ci, auquel le tuyau d'aspiration (26) est relié.

12. Machine-outil portative selon l'une quelconque des revendications précédentes, **caractérisée en ce que** l'agencement d'articulation (13) comporte un palier coulissant pour le réglage linéaire de la tête d'usinage (11) par rapport à l'élément de poignée (12) et/ou un agencement de palier pivotant (14, 15) ou est formé par celui-ci, dans laquelle la tête d'usinage (11) est logée de manière pivotante à l'aide de l'agencement de palier pivotant (14, 15) par rapport à l'élément de poignée (12) autour d'au moins un axe de pivotement.

13. Machine-outil portative selon l'une quelconque des revendications précédentes, **caractérisée en ce que** la tête d'usinage (11) est sollicitée par un agencement de ressort de positionnement (70) séparé du tuyau d'aspiration (26) dans la position de base par rapport à l'élément de poignée (12).

14. Machine-outil portative selon la revendication 13, **caractérisée en ce que** l'agencement de ressort de positionnement (70) comporte un premier ressort de positionnement (71) et un second ressort de positionnement (71) qui sollicitent la tête d'usinage (11) en sens inverse et/ou des côtés opposés l'un de l'autre et/ou avec un sens de rotation opposé l'un à l'autre en direction de la position de base, et/ou que l'agencement de ressort de positionnement (70) comporte au moins un ressort de positionnement (71) qui s'appuie directement contre des éléments de palier de l'agencement d'articulation (13) et/ou entre une extrémité longitudinale de l'élément de poignée (12).

15. Machine-outil portative selon l'une quelconque des revendications 13 ou 14, **caractérisée en ce qu'**au moins un ressort de positionnement (71) de l'agencement de ressort de positionnement (70) est agencé au niveau d'une périphérie intérieure ou une périphérie extérieure d'une partie d'arbre de palier, en particulier un boulon de palier ou est traversé par la partie de d'arbre de palier et/ou s'étend en anneau autour d'au moins un axe de pivotement (S1, S2) de l'agencement d'articulation (13) et/ou qu'au moins un ressort de positionnement (71) de l'agencement de ressort de positionnement (70) est logé au moins partiellement ou complètement dans un boîtier, en particulier un boîtier de palier d'un élément de palier de l'agencement d'articulation (13).
